# EUROPEAN PATENT SPECIFICATION

(11) **EP 3 101 518 B1**
(45) Date of publication and mention of the grant of the patent: **10.04.2019**
(21) Application number: 16171868.9
(22) Date of filing: 30.05.2016
(51) Int. Cl.: G06F 3/048, H04M 1/02, H04M 1/725

(54) **MOBILE TERMINAL SYSTEM AND METHOD FOR CONTROLLING THE SAME**
MOBILES ENDGERÄTESYSTEM UND VERFAHREN ZUR STEUERUNG DAVON
TERMINAL MOBILE, SERVEUR ET PROCÉDÉ DE COMMANDE DE CELUI-CI

(30) Priority: 01.06.2015 KR 20150077195
(43) Date of publication of application: 07.12.2016
(73) Proprietor: LG ELECTRONICS INC., Yeongdeungpo-gu Seoul 07336 (KR)
(72) Inventor: KWON, Yunmi, Seoul 06772 (KR); LEE, Kiseon, Seoul 06772 (KR)
(74) Representative: Cabinet Plasseraud

(56) References cited:
- EP-A1- 2 426 597
- EP-A2- 2 693 331
- US-A1- 2004 048 570
- US-A1- 2015 024 728

## Description

### BACKGROUND OF THE INVENTION

### Field of the Invention

The present invention relates to a mobile terminal system including multiple mobile terminals each being equipped with a transparent display and a method for controlling the same.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Recently, mobile terminals being equipped with a transparent display, which enables information on the display and information on a surrounding environment to be simultaneously presented (or displayed) on a transparent screen. EP2426597 discloses methods for dealing with an overlap between first and second screens of a mobile terminal by controlling the transparency of one or more of the screens. EP2693331 discloses a transparent display apparatus having first and second transparent screens that are configured to vary their transparency in the event of an overlap between the screens, EP2728446 relates to a method and system for sharing contents between electronic devices having a transparent display unit.

### SUMMARY OF THE INVENTION

Accordingly, an object of the present invention is to address the above-noted and other problems.

According to an exemplary embodiment of the present invention, an object of the present invention is to provide a mobile terminal system and a method for controlling the same, wherein the mobile terminal system can provide more useful information to users by using at least two mobile terminals each being equipped with a transparent display.

According to an exemplary embodiment of the present invention, another object of the present invention is to provide a mobile terminal system and a method for controlling the same, wherein the mobile terminal system can provide intuitive user experience and user interface respective to whether or not at least two mobile terminals each being equipped with a transparent display are overlapping one another or being spaced apart from one another.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to an aspect of the present invention, a mobile terminal system according to claim 1 is provided.

According to another aspect of the present invention, a method of controlling a mobile terminal system according to claim 13 is provided.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with an example useful for understanding the invention.
FIGs. 1B and 1C are conceptual views of one example of the mobile terminal, viewed from different directions;
FIG. 2 is a conceptual view of a deformable mobile terminal according to an alternative example useful for understanding the invention;
FIG. 3 is a conceptual view of a wearable mobile terminal according to another alternative example useful for understanding the invention;
FIG. 4 is a conceptual view of a wearable mobile terminal according to another alternative example useful for understanding the invention;
FIG. 5 illustrates an example of at least two mobile terminals being included in a mobile terminal system according to an exemplary embodiment of the present invention;
FIG. 6A to 6C illustrate an exemplary case when a change occurs in information being displayed on each display unit with respect to overlapping or spacing apart of the two mobile terminals included in the mobile terminal system according to an exemplary embodiment of the present invention;
FIG. 7A and 7B illustrates another exemplary case when a change occurs in information being displayed on each display unit with respect to overlapping or spacing apart of the two mobile terminals included in the mobile terminal system according to an exemplary embodiment of the present invention;
FIG. 8A to 8C illustrate yet another exemplary case when a change occurs in information being displayed on each display unit with respect to overlapping or spacing apart of the two mobile terminals included in the mobile terminal system according to an exemplary embodiment of the present invention;
FIG. 9 illustrates an exemplary case when a change occurs in information being displayed on each display unit with respect to overlapping or spacing apart of the two mobile terminals included in the mobile terminal system according to an exemplary embodiment of the present invention;
FIG. 10A and 10B illustrate another exemplary case when a change occurs in information being displayed on each display unit with respect to overlapping or spacing apart of the two mobile terminals included in the mobile terminal system according to an exemplary embodiment of the present invention;
FIG. 11 illustrates yet another exemplary case when a change occurs in information being displayed on each display unit with respect to overlapping or spacing apart of the two mobile terminals included in the mobile terminal system according to an exemplary embodiment of the present invention;
FIG. 12A and 12B illustrate an exemplary method for controlling display screens respective to the two mobile terminals in the mobile terminal system according to an exemplary embodiment of the present invention;
FIG. 13 illustrates an exemplary case when a change occurs in information being displayed on each display unit with respect to overlapping or spacing apart of the two mobile terminals included in the mobile terminal system according to an exemplary embodiment of the present invention;
FIG. 14 illustrates another exemplary case when a change occurs in information being displayed on each display unit with respect to overlapping or spacing apart of the two mobile terminals included in the mobile terminal system according to an exemplary embodiment of the present invention;
FIG. 15 illustrates yet another exemplary case when a change occurs in information being displayed on each display unit with respect to overlapping or spacing apart of the two mobile terminals included in the mobile terminal system according to an exemplary embodiment of the present invention;
FIG. 16 illustrates another exemplary case when a change occurs in information being displayed on each display unit with respect to overlapping or spacing apart of the two mobile terminals included in the mobile terminal system according to an exemplary embodiment of the present invention;
FIG. 17 illustrates yet another exemplary case when a change occurs in information being displayed on each display unit with respect to overlapping or spacing apart of the two mobile terminals included in the mobile terminal system according to an exemplary embodiment of the present invention;
FIG. 18A and 18B illustrate an exemplary case when a change occurs in information being displayed on each display unit with respect to a level of overlapping of the two mobile terminals included in the mobile terminal system according to an exemplary embodiment of the present invention;
FIG. 19 illustrates yet another exemplary case when a change occurs in information being displayed on each display unit with respect to overlapping or spacing apart of the two mobile terminals included in the mobile terminal system according to an exemplary embodiment of the present invention;
FIG. 20 illustrates yet another exemplary case when a change occurs in information being displayed on each display unit with respect to overlapping or spacing apart of the two mobile terminals included in the mobile terminal system according to an exemplary embodiment of the present invention;
FIG. 21 illustrates yet another exemplary case when a change occurs in information being displayed on each display unit with respect to overlapping or spacing apart of the two mobile terminals included in the mobile terminal system according to an exemplary embodiment of the present invention;
FIG. 22 illustrates yet another exemplary case when a change occurs in information being displayed on each display unit with respect to overlapping or spacing apart of the two mobile terminals included in the mobile terminal system according to an exemplary embodiment of the present invention;
FIG. 23A and 23B illustrate yet another exemplary case when a change occurs in information being displayed on each display unit with respect to overlapping or spacing apart of the two mobile terminals included in the mobile terminal system according to an exemplary embodiment of the present invention;
FIG. 24 illustrates yet another exemplary case when a change occurs in information being displayed on each display unit with respect to overlapping or spacing apart of the two mobile terminals included in the mobile terminal system according to an exemplary embodiment of the present invention;
FIG. 25A and 25B illustrate yet another exemplary case when a change occurs in information being displayed on each display unit with respect to overlapping or spacing apart of the two mobile terminals included in the mobile terminal system according to an exemplary embodiment of the present invention;
FIG. 26 illustrates yet another exemplary case when a change occurs in information being displayed on each display unit with respect to overlapping or spacing apart of the two mobile terminals included in the mobile terminal system according to an exemplary embodiment of the present invention; and
FIG. 27A and 27B illustrate an exemplary method for transmitting and/or receiving (or transceiving) data between two mobile terminals with respect to overlapping or spacing apart of the two mobile terminals included in the mobile terminal system according to an exemplary embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

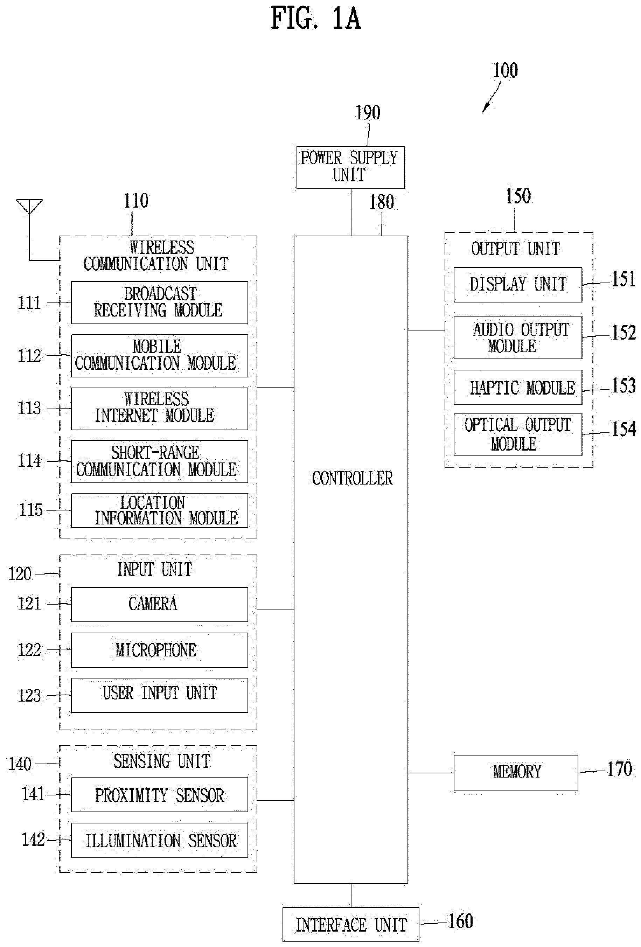

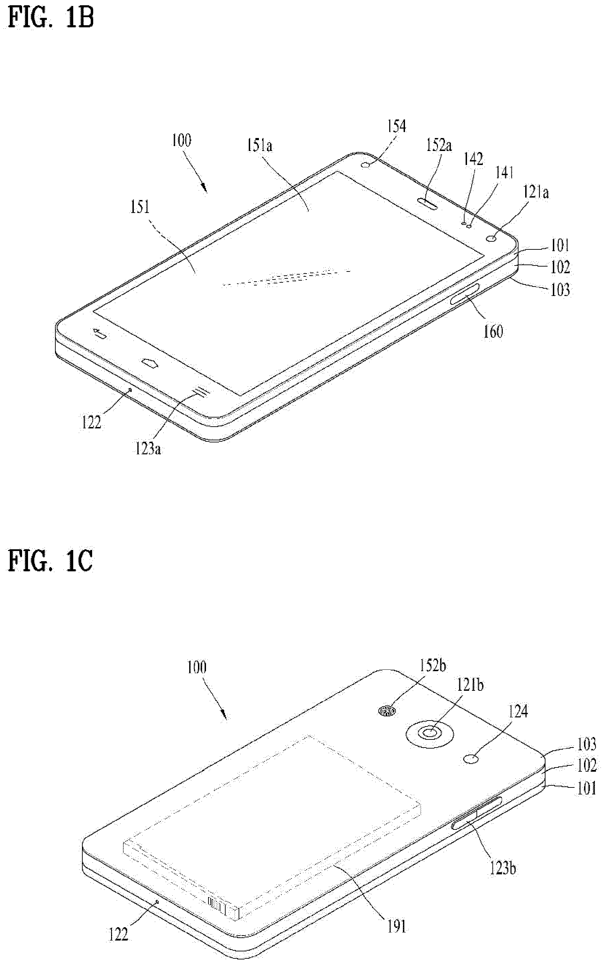

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

A system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sensing unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGs. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

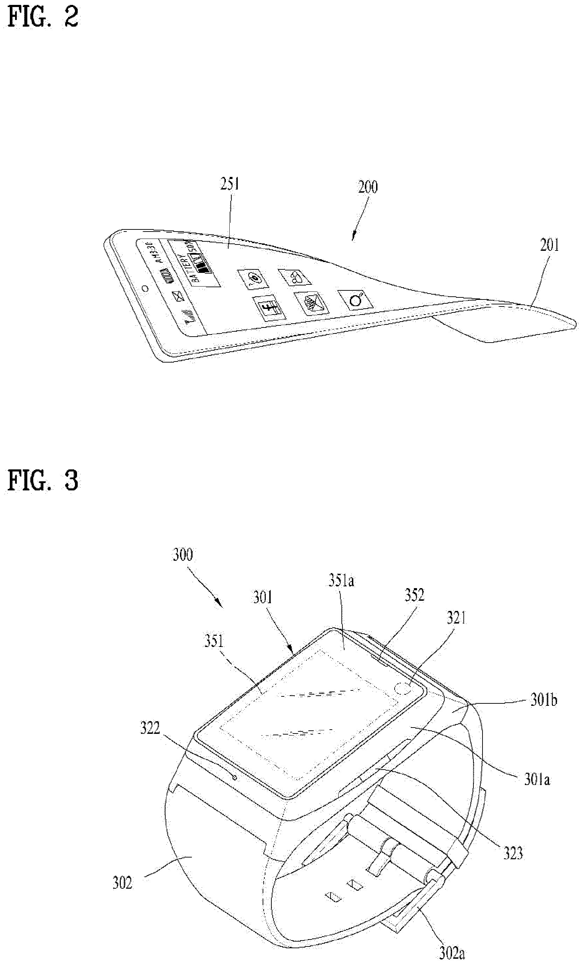

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGs. 1A to 1C.

The flexible display of mobile terminal 200 is generally formed as a lightweight, non-fragile display, which still exhibits characteristics of a conventional flat panel display, but is instead fabricated on a flexible substrate which can be deformed as noted previously.

The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When in a state that the flexible display unit 251 is not deformed (for example, in a state with an infinite radius of curvature and referred to as a first state), a display region of the flexible display unit 251 includes a generally flat surface. When in a state that the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized in such a manner that a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states.

One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251.

A battery (not shown in this figure) located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 may transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGs. 1A to 1C.

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion (not shown) electrically connected to the antenna to extend a ground area.

The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

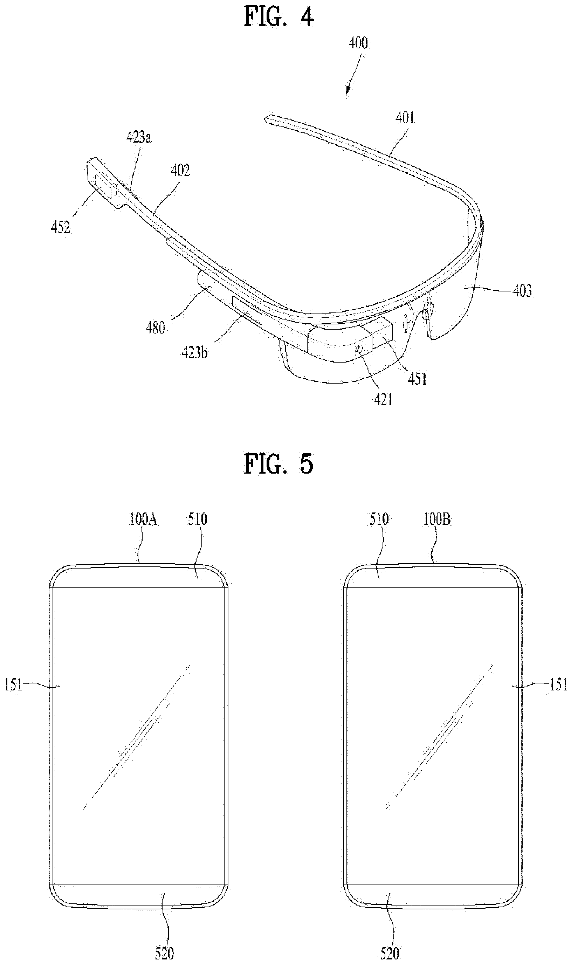

FIG. 4 is a perspective view illustrating one example of a glass-type mobile terminal 400 according to another exemplary embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGs. 1A to 1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part.

The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user.

In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module.

The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power (RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database.

A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter.

In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

In a case where the NFC module operates in a card mode, the mobile terminal may transmit card information on a general IC card to the outside. More specifically, if a mobile terminal having card information on a payment card (e. g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this case, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof.

The mobile terminal system and the method for controlling the same according to the exemplary embodiments of the present invention will hereinafter be described in detail with reference to FIG. 5 to FIG. 27. In this specification, although the mobile terminal 100 of FIG. 1a is given as an example of the mobile terminal being included in the mobile terminal system, the mobile terminal may also correspond to the mobile terminals 200, 300, and 400 shown in FIG. 2 to FIG. 4 according to the exemplary embodiments of the present invention. And, therefore, it should be understood that the present invention will not be limited only to the examples presented herein.

FIG. 5 illustrates an example of at least two mobile terminals being included in a mobile terminal system according to an exemplary embodiment of the present invention. Reference may be made to the description of FIG. 1a to FIG. 1c for parts of the mobile terminal 100 that have not been described in FIG. 5.

Referring to FIG. 5, the mobile terminal system according to the exemplary embodiment of the present invention may include at least two mobile terminals 100A and 100B. Each of the mobile terminals 100A and 100B may include a transparent display 151. Hereinafter, unless specifically mentioned otherwise, the display unit 151 may correspond to a transparent display. Herein, a transparent display 151 refers to a display unit 151 having a transparent display screen, and information on the surrounding outside environment of the mobile terminal 100A and 100B may be verified through the display unit 151.

Each of the mobile terminals 100A and 100B may correspond to a mobile terminal belonging to a same user, or one mobile terminal 100A may belong to a first user, and the other mobile terminal 100B may belong to a second user. For simplicity in the description, the mobile terminal 100A may be referred to as a first mobile terminal 100A or a main mobile terminal 100A, and the mobile terminal 100B may be referred to as a second mobile terminal 100B or a sub mobile terminal 100B. Additionally, in case the term mobile terminal 100 is mentioned, this may signify any one of the two mobile terminals 100A and 100B. Moreover, the display unit 151 of the first mobile terminal 100A may be referred to as a first display unit 151A, and the display unit 151 of the second mobile terminal 100B may be referred to as a second display unit 151B.

The mobile terminals 100A and 100B may each be equipped with a chip, a module, a circuit, and so on, that is required for driving the mobile terminals 100A and 100B on an upper edge part 510 and/or a lower edge part 520.

Each of the mobile terminals 100A and 100B may include a sensing unit 140, and, depending upon the exemplary embodiment of the present invention, only the first mobile terminal 100A may include a sensing unit 140. The sensing unit 140 may sense an overlapping and a spacing apart (or gap) between the first mobile terminal 100A and the second mobile terminal 100B. More specifically, the sensing unit 140 may sense an overlapping and a spacing apart (or gap) between a display unit 151 of the first mobile terminal 100A and a display unit 151 of the second mobile terminal 100B. Herein, an overlapping may signify a portion of the second mobile terminal 100B to overlap (or overlay) with the first mobile terminal 100A by being positioned on the first mobile terminal 100A or under the first mobile terminal 100A. The sensing unit 140 may sense whether or not the display unit 151 of the first mobile terminal 100A overlaps with the display unit 151 of the second mobile terminal 100B, a level of overlapping (width, surface area, and so on), the presence or absence of a gap (*i.e.,* whether or not the display unit 151 of the first mobile terminal 100A is spaced apart from the display unit 151 of the second mobile terminal 100B), a distance of the gap, a direction of the gap, and so on. According to the exemplary embodiment of the present invention, in case the above-described sensing unit 140 is included only in the first mobile terminal 100A, the first mobile terminal 100A a sensing result of sensing the overlapping and spacing apart (or gap) between the display unit 151 of the first mobile terminal 100A and the display unit 151 of the second mobile terminal 100B to the second mobile terminal 100B.

The first mobile terminal 100A and the second mobile terminal 100B may transmit and receive information, signals, data, and so on, to and from one another via wireless communication (or radio communication). Wireless communication connection may be established between the first mobile terminal 100A and the second mobile terminal 100B through the mobile communication module 112, the wireless Internet module 113, or the short-range communication module 114. For example, as a result of sensing the overlapping and spacing apart between the display unit 151 of the first mobile terminal 100A and the display unit 151 of the second mobile terminal 100B, the first mobile terminal 100A and the second mobile terminal 100B may transmit and receive at least one of information being outputted to the display unit 151 of the first mobile terminal 100A and information being outputted to the display unit 151 of the second mobile terminal 100B to and from one another. For example, the first mobile terminal 100A may be aware of information related to a status of the second mobile terminal 100B (e.g., information on an application currently being executed in the second mobile terminal 100B, information on whether or not the second mobile terminal 100B is overlapping with the first mobile terminal 100A, a distance of the gap between the second mobile terminal 100B and the first mobile terminal 100A, information that is being outputted to the display unit 151 of the second mobile terminal 100B, and so on). As another example, the second mobile terminal 100B may be aware of information related to a status of the first mobile terminal 100A (e.g., information on an application currently being executed in the first mobile terminal 100A, information on whether or not the first mobile terminal 100A is overlapping with the second mobile terminal 100B, a distance of the gap between the first mobile terminal 100A and the second mobile terminal 100B, information that is being outputted to the display unit 151 of the first mobile terminal 100A, and so on).

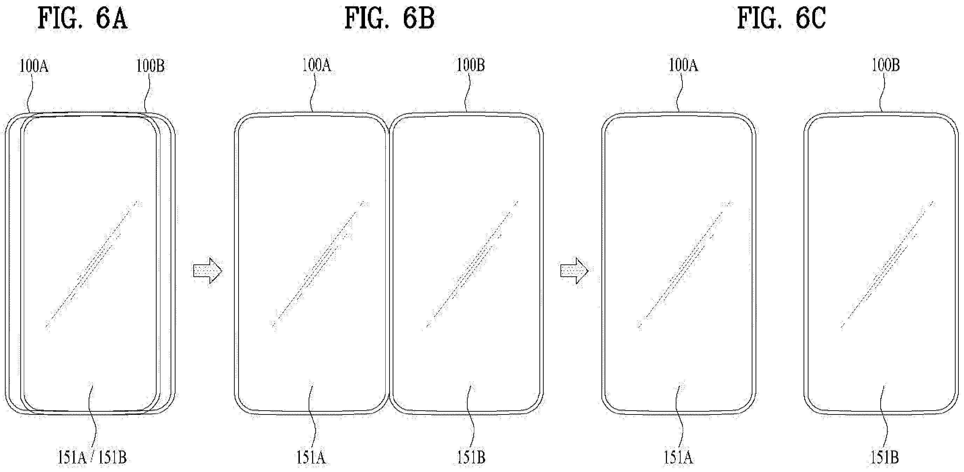

FIG. 6A to 6C illustrates an exemplary case when a change occurs in information being displayed on each display unit with respect to overlaying or spacing apart of the two mobile terminals included in the mobile terminal system according to an exemplary embodiment of the present invention.

Referring to FIG. 6A, the first mobile terminal 100A and the second mobile terminal 100B may overlap one another. Herein, the second mobile terminal 100B may be positioned (or placed) on the first mobile terminal 100A, or the first mobile terminal 100A may be positioned (or placed) the second mobile terminal 100B. Additionally, the first mobile terminal 100A and the second mobile terminal 100B may completely overlap one another, or the first mobile terminal 100A and the second mobile terminal 100B may overlap one another to a predetermined level or more (e.g., 90 percent (90%) or more).

The sensing unit 140 of the first mobile terminal 100A and/or the second mobile terminal 100B may sense the overlapping and spacing apart (or gap) between the first display unit 151A and the second display unit 151B. More specifically, the sensing unit 140 may sense that the first display unit 151A and the second display unit 151B are overlapping one another at a predetermined level or more.

In case the first display unit 151A and the second display unit 151B completely overlap one another, or in case the first display unit 151A and the second display unit 151B overlap one another to a predetermined level or more, the first display unit 151A and the second display unit 151B may both display the same information.

For example, the controller 180 of the first mobile terminal 100A may output an execution screen of a specific application on the first display unit 151A, and the controller 180 of the second mobile terminal 100B may also output execution screen of a specific application on the second display unit 151B. The user may control the execution screen(s) through the first display unit 151A or the second display unit 151B.

Since the first mobile terminal 100A and the second mobile terminal 100B periodically or aperiodically (e.g., when an event occurs) transmit and receive status information respective to one another to and from one another, the first display unit 151A and the second display unit 151B may display common information, and, in case the user controls the first mobile terminal 100A or the second mobile terminal 100B, the remaining mobile terminal may also be equally controlled.

Referring to FIG. 6B, the first mobile terminal 100A and the second mobile terminal 100B may be serially aligned one next to the other. More specifically, the first mobile terminal 100A and the second mobile terminal 100B may not be spaced apart from one another, and the first display unit 151A and the second display unit 151B may not overlap one another.

In case the first mobile terminal 100A and the second mobile terminal 100B are serially aligned one next to the other, at least a portion of the first display unit 151A and at least a portion of the second display unit 151B may display information that is associated with one another yet different from one another. More specifically, among the content corresponding to the specific application, the controller 180 of the first mobile terminal 100A may display first information on the first display unit 151A, and, among the content corresponding to the specific application, the controller 180 of the second mobile terminal 100B may display second information on the second display unit 151B.

For example, in case the specific application corresponds to a map application or a navigation application, among the map corresponding to a predetermined range (or scope), the first display unit 151A may display a map of a first area, and, among the map corresponding to a predetermined range (or scope), the second display unit 151B may display a map of a second area. Accordingly, by overcoming the conventional limitations (or restrictions) of being capable of viewing only the map of the first area in a single view (or screen), the user may be capable of verifying a map of a broader (or wider) area in a single view (or screen) without having to input a separate zoom-out command.

Although it is not shown in the drawing, starting from the above-described state of the first display unit 151A and the second display unit 151B overlapping one another to less than the predetermined level, as shown in FIG. 6A, to the above-described state of the first display unit 151A and the second display unit 151B being aligned one next to the other, as shown in FIG. 6B, at least a portion of the first display unit 151A and at least a portion of the second display unit 151B may display information that is associated with one another yet different from one another.

The sensing unit 140 of the first mobile terminal 100A and/or the second mobile terminal 100B may sense the overlapping and spacing apart (or gap) between the first display unit 151A and the second display unit 151B. More specifically, the sensing unit 140 may sense that the first display unit 151A and the second display unit 151B overlap one another to less than the predetermined level, or the sensing unit 140 may sense that the first display unit 151A and the second display unit 151B do not overlap one another and that the first display unit 151A and the second display unit 151B are substantially not spaced apart from one another (e.g., the display units are spaced apart from one another yet not more than a width of the edge parts of each mobile terminal).

The user may control the information being displayed on the first display unit 151A through the first display unit 151A, and the user may control the information being displayed on the second display unit 151B through the second display unit 151B. The first mobile terminal 100A and the second mobile terminal 100B may periodically or aperiodically (e.g., when an event occurs) transmit and receive status information respective to one another to and from one another.

Referring to FIG. 6C, the first mobile terminal 100A and the second mobile terminal 100B may be spaced apart from one another.

In case the first mobile terminal 100A and the second mobile terminal 100B are spaced apart from one another, the first display unit 151A and the second display unit 151B may display information that is associated with one another yet different from one another.

For example, among the content corresponding to the specific application, the controller 180 of the first mobile terminal 100A may display first information on the first display unit 151A, and, among the content corresponding to the specific application, the controller 180 of the second mobile terminal 100B may display first information on the second display unit 151B.

As another example, the controller 180 of the first mobile terminal 100A may display first content corresponding to a first application on the first display unit 151A, and the controller 180 of the second mobile terminal 100B may display second content corresponding to a second application on the second display unit 151B.

According to the exemplary embodiment of the present invention, the information being displayed on the second display unit 151B may vary depending upon a distance of the gap between the second mobile terminal 100B (or the second display unit 151B) and the first mobile terminal 100A (or the first display unit 151A).

The sensing unit 140 of the first mobile terminal 100A and/or the second mobile terminal 10B may sense whether or not the first display unit 151A and the second display unit 151B are spaced apart from one another, and the sensing unit 140 may also sense a distance between the first display unit 151A and the second display unit 151B.

The user may control the information being displayed on the first display unit 151A through the first display unit 151A, and the user may also control the information being displayed on the second display unit 151B through the second display unit 151B. The first mobile terminal 100A and the second mobile terminal 100B may periodically or aperiodically (e.g., when an event occurs) transmit and receive status information respective to one another to and from one another.

According to the exemplary embodiment of the present invention, as described in the procedures starting from FIG. 6A to 6C, by relocating (or repositioning) at least one of the first mobile terminal 100A and the second mobile terminal 100B, the user may expand the display area.

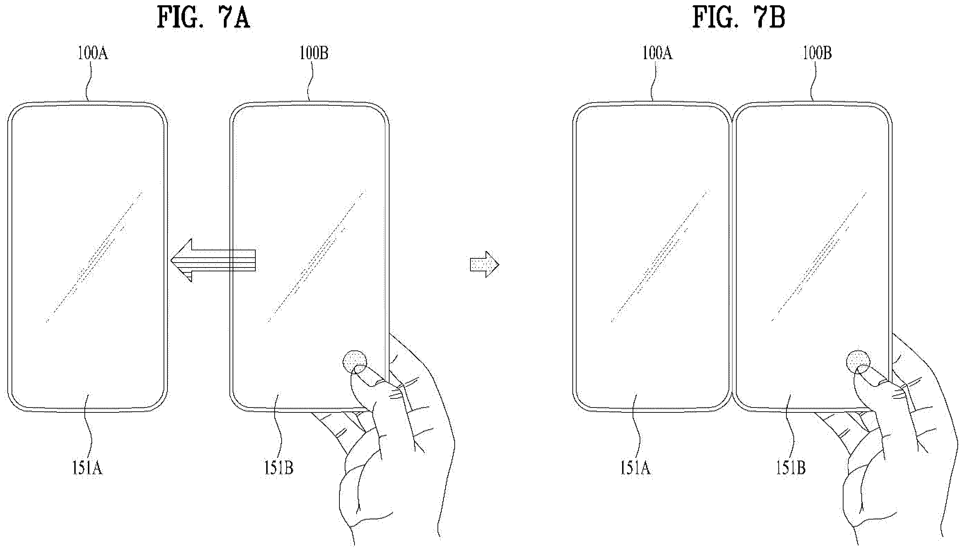

FIG. 7A and 7B illustrate another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

Referring to FIG. 7A and 7B, the first mobile terminal 100A and the second mobile terminal 100B may be spaced apart from one another. In case the first mobile terminal 100A and the second mobile terminal 100B are spaced apart from one another, as described above with reference to FIG. 6C, the first display unit 151A and the second display unit 151B may display information that is associated with one another yet different from one another. Additionally, the information being displayed on the second display unit 151B may vary depending upon a distance of the gap between the second mobile terminal 100B (or the second display unit 151B) and the first mobile terminal 100A (or the first display unit 151A).

The controller 180 of the second mobile terminal 100B may sense (or detect) a predetermined command. For example, the predetermined command may correspond to a touch command touching an arbitrary (or random) area of the second display unit 151B.

While touching an arbitrary area of the second display unit 151B, the user may gradually reduce the distance (or gap) between the second mobile terminal 100B and the first mobile terminal 100A, thereby positioning the first mobile terminal 100A and the second mobile terminal 100B one next to the other, as shown in FIG. 7B.

The sensing unit 140 of the first mobile terminal 100A and/or the second mobile terminal 100B may sense whether or not the first mobile terminal 100A and the second mobile terminal 100B are spaced apart from one another, and the sensing unit 140 may also sense the distance (or gap) between the first mobile terminal 100A and the second mobile terminal 100B. More specifically, the sensing unit 140 of the first mobile terminal 100A and/or the second mobile terminal 100B may sense that the distance (or gap) between the first display unit 151A and the second display unit 151B gradually becomes shorter (or smaller) until the first display unit 151A and the second display unit 151B are substantially no longer spaced apart from one another (e.g., the display units are spaced apart from one another yet not more than a width of the edge parts of each mobile terminal).

The first mobile terminal 100A and the second mobile terminal 100B may periodically or aperiodically (e.g., when an event occurs) transmit and receive status information respective to one another to and from one another. In this exemplary embodiment, the controller 180 of the second mobile terminal 100B may transmit data indicating that the predetermined command is being detected (or sensed) to the first mobile terminal 100A through the wireless communication unit 110.

While being in a state of detecting the predetermined command, the second display unit 151B may consistently maintain the information that is being displayed regardless of the distance (or gap) between the second display unit 151B and the first display unit 151A. More specifically, while being in a state of detecting the predetermined command, even if the distance between the first display unit 151A and the second display unit 151B changes, the information being displayed on the second display unit 151B may not be changed. In case the distance between the first display unit 151A and the second display unit 151B is reduced, while the second display unit 151B is in a state of detecting the predetermined command, the controller 180 of the second mobile terminal 100B may consistently maintain the information, which was displayed on the second display unit 151B at the point when the second display unit 151B has begun to detect the predetermined command, regardless of its distance from the first display unit 151A.

According to this exemplary embodiment of the present invention, in case information, which is intended to be compared with the information being displayed on the first display unit 151A, is being displayed on the second display unit 151B, while holding the information that is being displayed on the second display unit 151B, the user may reposition the mobile terminals so that the first display unit 151A and the second display unit 151B can be aligned one next to the other.

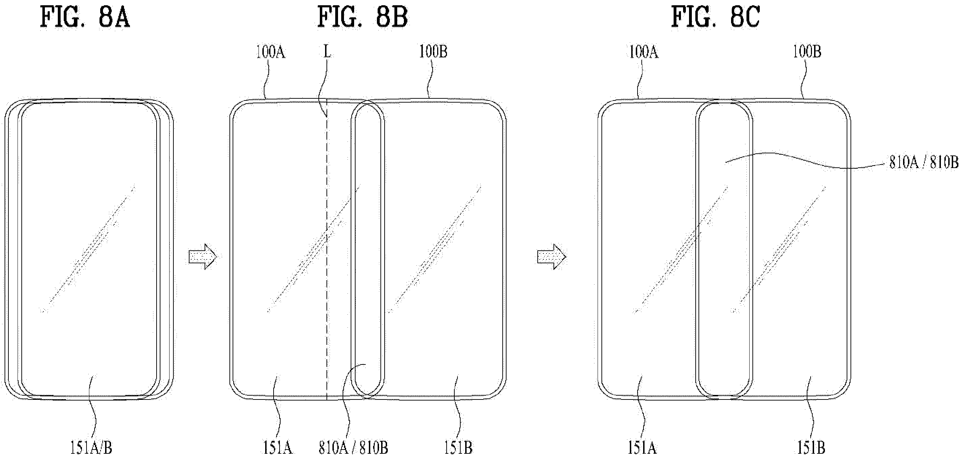

FIG. 8A to 8C illustrate yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

Referring to FIG. 8A, the first mobile terminal 100A and the second mobile terminal 100B overlap one another. The first display unit 151A and the second display unit 151B may completely overlap one another, or the first display unit 151A and the second display unit 151B may overlap one another to a predetermined level or more (e.g., 90 percent (90%) or more). In case the first display unit 151A and the second display unit 151B completely overlap one another, or in case the first display unit 151A and the second display unit 151B overlap one another to a predetermined level or more, the display units 151A and 151B may display the same information.

Referring to FIG. 8A to 8C, the user may reposition the first mobile terminal 100A and/or the second mobile terminal 100B so that the overlapping level between the first display unit 151A and the second display unit 151B can be reduced. As the overlapping level between the first display unit 151A and the second display unit 151B is reduced, the display area may be expanded. And, as the display are is expanded, at least a portion of the first display unit 151A and at least a portion of the second display unit 151B may display information that is associated with one another yet different from one another.

The sensing unit 140 of the first mobile terminal 100A and/or the second mobile terminal 100B may sense the overlapping and spacing apart (or gap) between the first display unit 151A and the second display unit 151B. More specifically, the sensing unit 140 may sense that the first display unit 151A and the second display unit 151B overlap one another to less than the predetermined level, or the sensing unit 140 may sense that the first display unit 151A and the second display unit 151B do not overlap one another and that the first display unit 151A and the second display unit 151B are substantially not spaced apart from one another (e.g., the display units are spaced apart from one another yet not more than a width of the edge parts of each mobile terminal).

In this exemplary embodiment, since a portion of the first display unit 151A (e.g., a first area 810A) and a portion of the second display unit 151B (e.g., a second area 810B) overlap one another, at least one of the first area 810A and the second area 810B may display common information. Herein, common information may correspond to information that is commonly associated with the information being displayed on the first display unit 151A and the information being displayed on the second display unit 151B.

According to the exemplary embodiment, the common information may be displayed on at least one of the first area 810A and the second area 810B only when the width or surface area of the first area 810A and the second area 810B is equal to or greater that a first level and less than a second level. For example, the first level may correspond to 1/4 of the width or surface area of the first display unit 151A or the second display unit 151B, and the second level may correspond to 1/3 of the width or surface area of the first display unit 151A or the second display unit 151B. However, the present invention will not be limited only to this. In case the width or surface area of the first area 810A and the second area 810B do not belong to the range corresponding to the first level or more and less than the second level, as shown in FIG. 8B, a guide indicator L may be indicated on the first display unit 151A or the second display unit 151B. Herein, in case the first display unit 151A and the second display unit 151B overlap one another up to a point where the guide indicator L is indicated, this may be used to notify to the user that common information may be displayed on the first area 810A and the second area 810B. Herein, based upon the sensing data of the sensing unit 140, the guide indicator L may be generated by the controller 180 of the first mobile terminal 100A or by the controller 180 of the second mobile terminal 100B.

According to the exemplary embodiment, in case the common information is displayed on at least one of the first area 810A and the second area 810B, the volume (or size) of the common information, which is being displayed on at least one of the first area 810A and the second area 810B, may vary depending upon the width or surface area of the first area 810A and the second area 810B. For example, as shown in FIG. 8C, as the width or surface area of the first area 810A and the second area 810B becomes larger, a larger volume of information may be displayed on at least one of the first area 810A and the second area 810B.

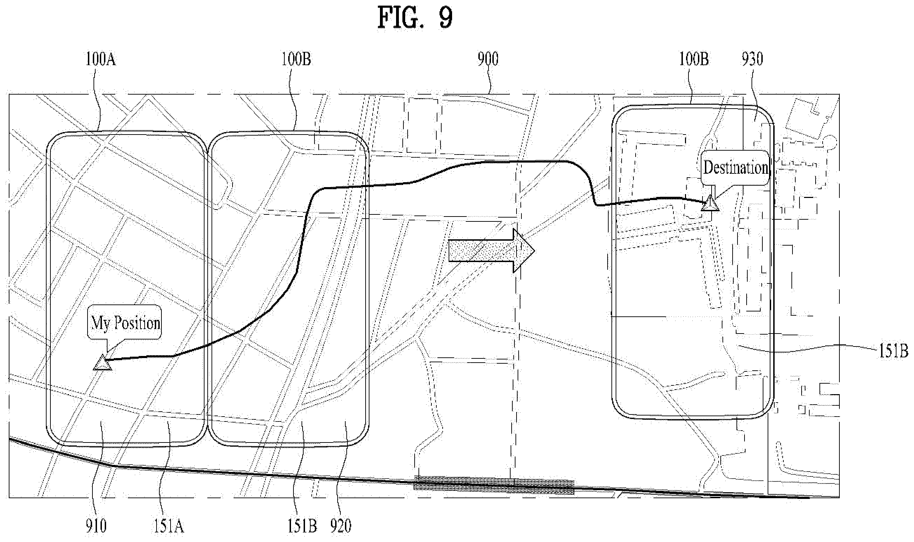

FIG. 9 illustrates an exemplary case when a change occurs in information being displayed on each display unit with respect to overlapping or spacing apart of the two mobile terminals included in the mobile terminal system according to an exemplary embodiment of the present invention.

By overlapping at least two mobile terminals 100A and 100B one over the other, or by spacing at least two mobile terminals 100A and 100B apart from one another, the user may expand the display area. Most particularly, by spacing the second mobile terminal 100B apart from the first mobile terminal 100A, the user may be capable of easily verifying information that is difficult to be viewed (or verified) in a single view (or screen) by only using the first mobile terminal 100A.

According to this exemplary embodiment of the present invention, the first display unit 151A of the first mobile terminal 100A and the second display unit 151B of the second mobile terminal 100B are displaying content corresponding to a map application. In case the first display unit 151A and the second display unit 151B completely overlap one another, or in case the first display unit 151A and the second display unit 151B overlap one another to a predetermined level or more, the first display unit 151A and the second display unit 151B may display the same execution screen of the map application. Thereafter, as the user repositions the first mobile terminal 100A and/or the second mobile terminal 100B, in case the overlapping level between the first mobile terminal 100A and the second mobile terminal 100B is reduced, the display area may be expanded. And, accordingly, at least a portion of the first display unit 151A and at least a portion of the second display unit 151B (areas that do not overlap one another) may display information that is associated with one another yet different from one another. Additionally, as the first display unit 151A and the second display unit 151B are spaced apart from one another instead of overlapping one another, the first display unit 151A and the second display unit 151B may display information that is associated with one another yet different from one another. For example, from a map 900 of a predetermined range (or scope), the first display unit 151A displays a first area of the map 910, and, from a map 900 of a predetermined range (or scope), the second display unit 151B displays a second area of the map 920 and 930. Herein, the second area of the map 920 and 930 may vary depending upon the distance (or gap) between the first display unit 151A and the second display unit 151B.

For example, the controller 180 of the first mobile terminal 100A may transmit data respective to the overlapping and spacing apart (or gap) between the first display unit 151A and the second display unit 151B through the wireless communication unit 110, and the second mobile terminal 100B may display a second area of the map 920 and 930 based upon the data transmitted from the first mobile terminal 100A from content associated with the Map application.

When it is assumed that the user verifies a travel route (or travel path) starting from the current position to a destination by using the map application, the assumed situation will hereinafter be described in detail.

In case of the related art, by zooming-in to or zooming-out from the map that is currently being displayed on the display unit 151 of the mobile terminal 100, the user may verify the travel route from the current position to the destination. Most particularly, in case the distance between the current position and the destination is large (or long), a scale of the map is required to be small (i.e., the map is required to be displayed in a small scale) in order to allow the user to verify the travel route in a single view (or screen), and, accordingly, it is difficult to verify detailed information. And, the user also experiences inconvenience in having to verify the travel route in detail by scrolling the screen while zooming-in to the map.

However, in case of this exemplary embodiment, since the user can expand the display area by repositioning the second mobile terminal 100B, the user may be capable of verifying information on a wanted area within the map without having to separately perform zoom-in/zoom-out or scrolling of the map.

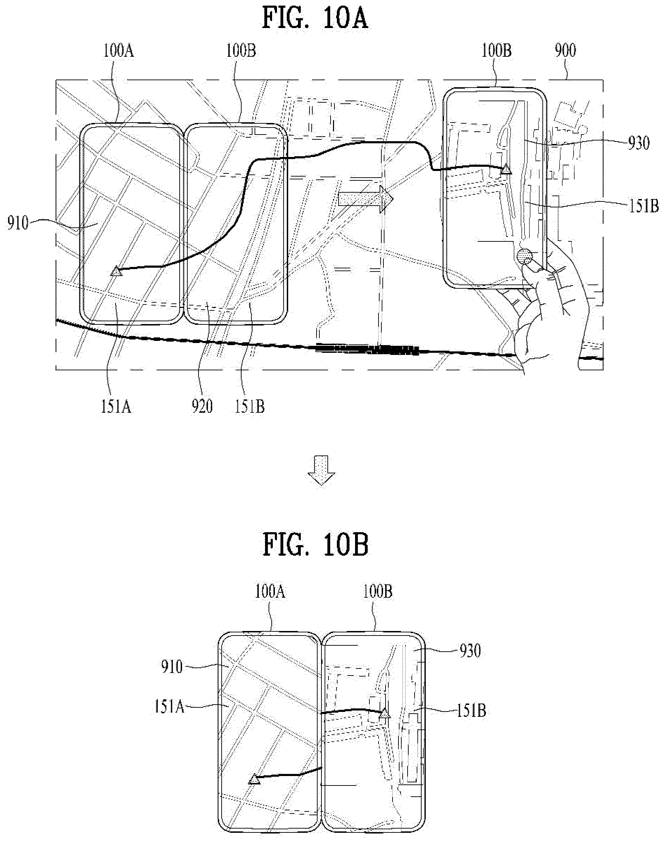

FIG. 10A and 10B illustrate another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the examples described above with reference to FIG. 9 will be omitted for simplicity.

Since FIG. 10A is similar to the description provided above with reference to FIG. 9, detailed description of the same will be omitted for simplicity, and the detailed description of this example will be mainly focused on difference between FIG. 10 and FIG. 9.

The controller 180 of the second mobile terminal 100B may sense (or detect) a predetermined command. For example, the predetermined command may correspond to a touch command touching an arbitrary (or random) area of the second display unit 151B.

While touching an arbitrary area of the second display unit 151B, the user may gradually reduce the distance (or gap) between the second mobile terminal 100B and the first mobile terminal 100A, thereby positioning the first mobile terminal 100A and the second mobile terminal 100B one next to the other, as shown in FIG. 10B. Additionally, the controller 180 of the second mobile terminal 100B may transmit data corresponding to the predetermined command to the first mobile terminal 100A through the wireless communication unit 110. In this exemplary embodiment of the present invention, as shown in FIG. 10A, it will be assumed that the predetermined command has started to be detected while the second area of the map 930 is being displayed on the second display unit 151B.

While being in a state of detecting the predetermined command, the second display unit 151B may continue to display the second area of the map 930 regardless of the distance (or gap) between the second display unit 151B and the first display unit 151A. In case the distance between the first display unit 151A and the second display unit 151B is reduced, while the second display unit 151B is in a state of detecting the predetermined command, the controller 180 of the second mobile terminal 100B may consistently maintain the information (the second area of the map 930), which was displayed on the second display unit 151B at the point when the second display unit 151B has begun to detect the predetermined command, regardless of its distance from the first display unit 151A.

For example, the user may be capable of verifying the first area of the map 910, which corresponds to the current position, and the second area of the map 930, which corresponds to the destination, in a single view through the first display unit 151A and the second display unit 151B.

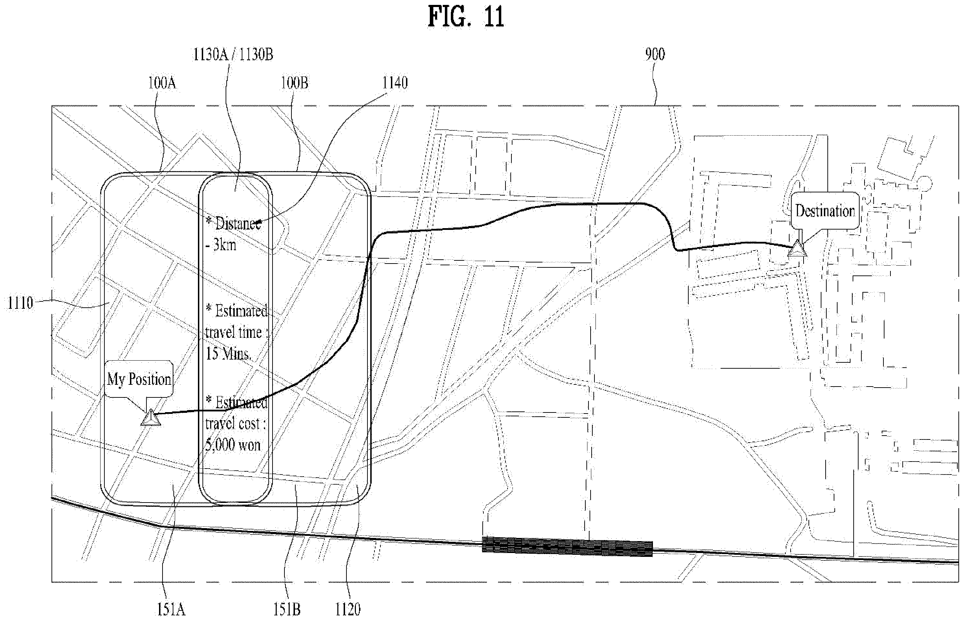

FIG. 11 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the examples described above with reference to FIG. 9 and FIG. 10 will be omitted for simplicity.

Referring to FIG. 11, the first mobile terminal 100A and the second mobile terminal 10B partially overlap one another. In this case, at least a portion of the first display unit 151A and at least a portion of the second display unit 151B (e.g., areas that do not overlap one another) may display information that is associated with one another yet different from one another. For example, the first display unit 151A may display a first area of the map 1110 from a predetermined range of the map 900, and the second display unit 151B may display a second area of the map 1120 from a predetermined range of the map 900. Since the first display unit 151A and the second display unit 151B partially overlap one another, a portion of the first area of the map 1110 and a portion of the second area of the map 1120 may be identical to one another.

Additionally, the overlapping portion of the first display unit 151A and the second display unit 151B, i.e., at least one of a first area 1130A of the first display unit 151A and a second area 1130B of the second display unit 151B may display common information 1140. Herein, the common information 1140 may correspond to information that is commonly associated with the information (e.g., information associated with the map application) being displayed on the first display unit 151A and the information (e.g., information associated with the map application) being displayed on the second display unit 151B.

In this exemplary embodiment, at least one of the first area 1130A of the first display unit 151A and the second area 1130B of the second display unit 151B may display distance information from the current position to the destination, estimated travel time information, estimated travel cost information, and so on, as the common information 1140.

For example, in case the first display unit 151A and the second display unit 151B partially overlap one another, the controller 180 of the first mobile terminal 100A may display the common information 1140 on the first area 1130A.

As another example, in case the first display unit 151A and the second display unit 151B partially overlap one another, the controller 180 of the first mobile terminal 100A may transmit data corresponding to the common information 1140 to the second mobile terminal 100B through the wireless communication unit 110. Thereafter, based upon the data transmitted from the first mobile terminal 100A, the controller 180 of the second mobile terminal 100B may display the common information 1140 on the second area 1130B.

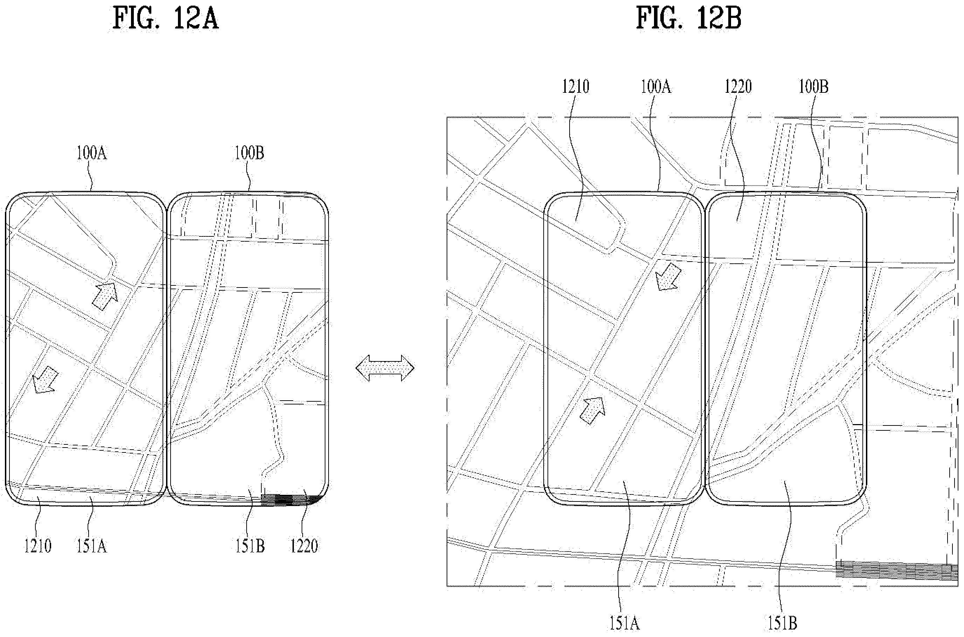

FIG. 12A and 12B illustrate an exemplary method for controlling display screens respective to the two mobile terminals in the mobile terminal system according to an exemplary embodiment of the present invention. Hereinafter, detailed description of the parts that overlap with the above-described examples will be omitted for simplicity.

Referring to FIG. 12A and 12B, the controller 180 of the first mobile terminal 100A may display first content 1210 on the first display unit 151A, and the controller 180 of the second mobile terminal 100B may display second content 1220 on the second display unit 151B. The first content 1210 and the second content 1220 may vary depending upon the distance (or gap) between the first display unit 151A and the second display unit 151B. And, the first content 1210 and the second content 1220 may be associated with the same application or may each be associated with a different predetermined application.

The user may control the first content 1210 through the first display unit 151A, and the user may control the second content 1220 through the second display unit 151B. However, depending upon the exemplary embodiment, in case of a predetermined function, the user may control both the first content 1210 and the second content 1220 by using a command inputted through the first display unit 151A, or the user may control both the first content 1210 and the second content 1220 by using a command inputted through the second display unit 151B.

For example, the controller 180 of the first mobile terminal 100A may detect a first command within the first display unit 151A. Herein, the first command may correspond to a command for zooming-in to a screen corresponding to the first content 1210, and, accordingly, the first command may correspond to a touch input, which is inputted by having the user touch two arbitrary areas of the first display unit 151A and, then, perform a flicking motion along a direction allowing the two areas to be spaced further apart from one another. The controller 180 of the first mobile terminal 100A may transmit data respective to the first command to the second mobile terminal 100B through the wireless communication unit 100. And, the controller 180 of the first mobile terminal 100A may zoom-in to a screen corresponding to the first content 1210 to a predetermined level in accordance with the first command, and, then, based upon the data transmitted from the first mobile terminal 100A, the controller of the second mobile terminal 100B may zoom-in to a screen corresponding to the second content 1220 to a predetermined level (FIG. 12A→FIG. 12B).

As another example, the controller 180 of the first mobile terminal 100A may detect a second command within the first display unit 151A. Herein, the second command may correspond to a command for zooming-out of a screen corresponding to the first content 1210, and, accordingly, the second command may correspond to a touch input, which is inputted by having the user touch two arbitrary areas of the first display unit 151A and, then, perform a flicking motion along a direction allowing the two areas to become closer to one another. The controller 180 of the first mobile terminal 100A may transmit data respective to the second command to the second mobile terminal 100B through the wireless communication unit 100. And, the controller 180 of the first mobile terminal 100A may zoom-out of a screen corresponding to the first content 1210 to a predetermined level in accordance with the second command, and, then, based upon the data transmitted from the first mobile terminal 100A, the controller of the second mobile terminal 100B may zoom-out of a screen corresponding to the second content 1220 to a predetermined level (FIG.12B→ FIG. 12A).

Depending upon the exemplary embodiment, controlling a predetermined function of the second mobile terminal 100B may only be allowed to be performed through the first mobile terminal 100A, which corresponds to the main mobile terminal, and controlling a predetermined function of the first mobile terminal 100A may not be allowed to be performed through the second mobile terminal 100B.

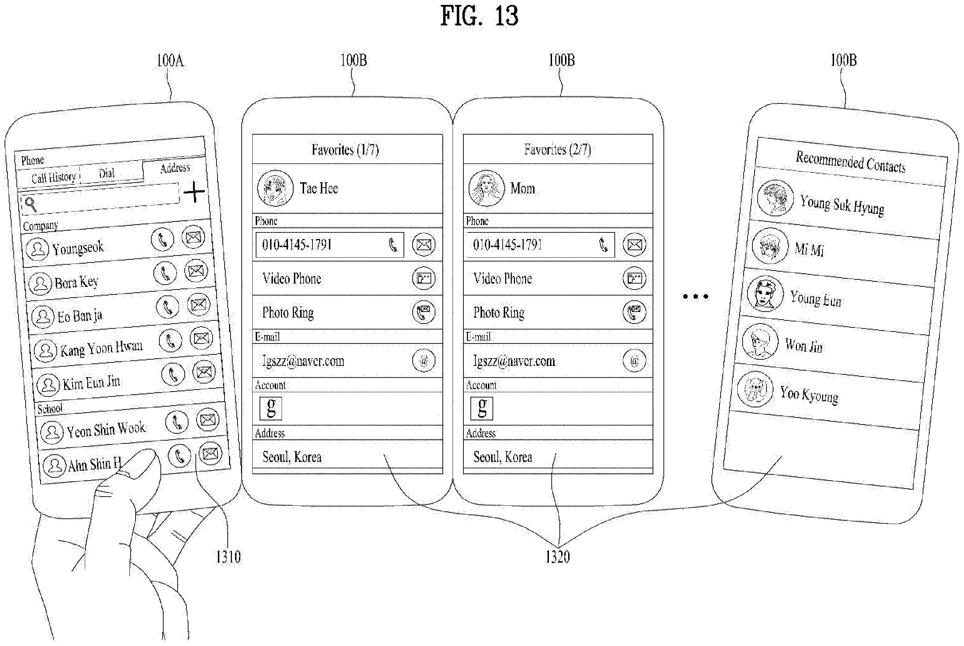

FIG. 13 illustrates an exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A may display first content 1310 on the first display unit 151A, and the controller 180 of the second mobile terminal 100B may display second content 1320 on the second display unit 151B. In case the first display unit 151A and the second display unit 151B completely overlap one another, or in case the first display unit 151A and the second display unit 151B overlap one another to a predetermined level, the first content 1310 and the second content 1320 may be identical to one another. Additionally, in case the first display unit 151A and the second display unit 151B partially overlap one another, the display area may be expanded, and at least a portion of the first display unit 151A and at least a portion of the second display unit 151B may display information that is associated with one another yet different from one another. Moreover, in case the first display unit 151A and the second display unit 151B are spaced apart from one another instead of overlapping one another, the first display unit 151A and the second display unit 151B may display information that is associated with one another yet different from one another. At this point, information being displayed on the second display unit 151B may vary depending upon the distance between the second display unit 151B and the first display unit 151A.

For example, in case the first display unit 151A and the second display unit 151B are spaced apart from one another, the first content 1310 being displayed on the first display unit 151A may correspond to a function of verifying contacts registered in a Contact List included in a Contacts application. Additionally, the second content 1320 being displayed on the second display unit 151B may correspond to a function of verifying favorite contacts within the Contacts application. The controller 180 of the second mobile terminal 100B may display the second content 1320 on the second display unit 151B, wherein the second content 1320 includes information on contact points having higher Favorite (or preferred) rank levels as the distance (or gap) between the second display unit 151B and the first display unit 151A becomes shorter (or smaller). And, the controller 180 of the second mobile terminal 100B may display the second content 1320 on the second display unit 151B, wherein the second content 1320 includes information on contact points having lower Favorite (or preferred) rank levels as the distance (or gap) between the second display unit 151B and the first display unit 151A becomes longer (or larger). Furthermore, in case the distance (or gap) between the second display unit 151B and the first display unit 151A is equal to or more than a predetermined level, the controller 180 of the second mobile terminal 100B may display second content 1320 on the second display unit 151B, wherein the second content 1320 includes information on contacts having no history of receiving and/or transmitting calls or messages during a predetermined period of time.

For example, the controller 180 of the first mobile terminal 100A may transmit data respective to the overlapping and spacing apart (or gap) between the first display unit 151A and the second display unit 151B to the second mobile terminal 100B through the wireless communication unit 110, and, then, among diverse content associated with the Contacts application, the second mobile terminal 100B may display second content 1320 to the second display unit 151B, wherein the second content 1320 is based upon the data transmitted from the fist mobile terminal 100A.

According to this exemplary embodiment, as the second mobile terminal 100B is spaced further apart from the first mobile terminal 100A, the user may be capable of intuitively recognizing the fact that information having less relevance or importance or information undergoing multiple depths is being displayed on the second display unit 151B.

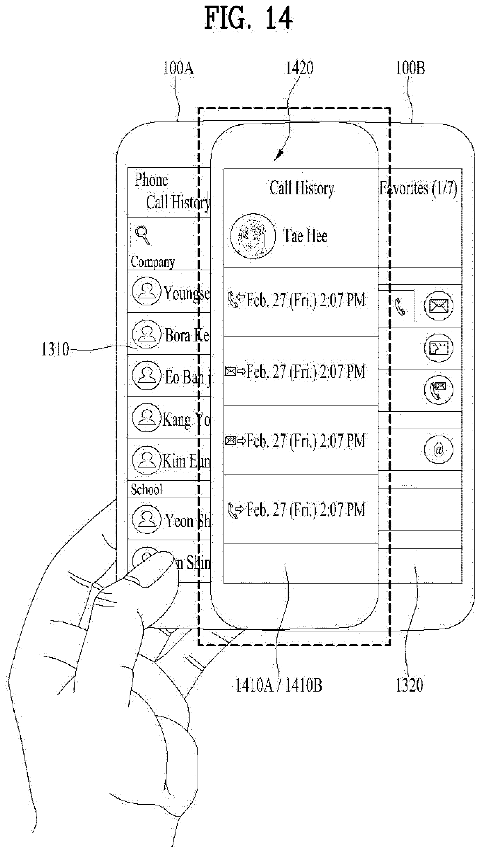

FIG. 14 illustrates another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A may display first content 1310 on the first display unit 151A, and the controller 180 of the second mobile terminal 100B may display second content 1320 on the second display unit 151B. Since the first display unit 151A and the second display unit 151B partially overlap one another, at least a portion of the first display unit 151A and at least a portion of the second display unit 151B may display information that is associated with one another yet different from one another. For example, the first content 1310 being displayed on the first display unit 151A may correspond to a function of verifying contacts registered in a Contact List included in a Contacts application. And, the second content 1320 being displayed on the second display unit 151B may include information on contacts having the highest Favorite rank level within the Contacts application.

Additionally, the portion (or area) where the first display unit 151A and the second display unit 151B overlap one another, *i.e.,* at least one of a first area 1410A of the first display unit 151A and a second area 1410B of the second display unit 151B may display common information 1420. In this exemplary embodiment, the common information 1420 may correspond to information that is associated with the first content 1310 and the second content 1320 among the information included in the Contacts application, and, herein, for example, information associated with the Contacts application may correspond to information respective to a call history with a contact having the highest Favorite rank level among the contact information registered in the Contacts application.

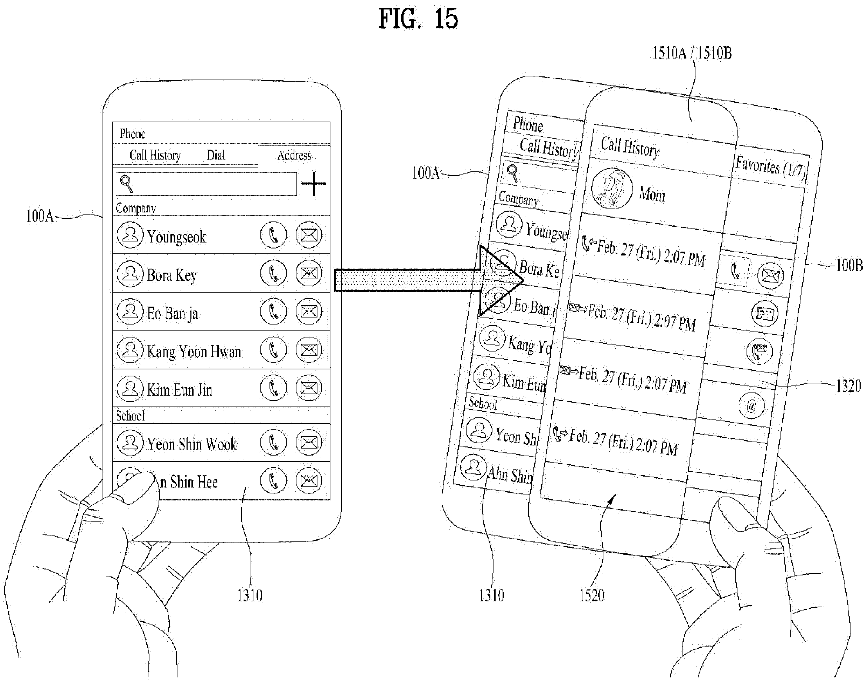

FIG. 15 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A may display first content 1310 on the first display unit 151A, and the controller 180 of the second mobile terminal 100B may display second content 1320 on the second display unit 151B. In case the first display unit 151A and the second display unit 151B are spaced apart from one another, the display area may be expanded, and the first display unit 151A and the second display unit 151B may display information that is associated with one another yet different from one another. And, the information being displayed on the second display unit 151B may vary depending upon a distance (or gap) between the second display unit 151B and the first display unit 151A.

The controller 180 of the second mobile terminal 100B may detect a predetermined command. For example, the predetermined command may correspond to a touch command touching an arbitrary (or random) area of the second display unit 151B.

While touching an arbitrary area of the second display unit 151B, the user may partially overlap the first mobile terminal 100A with the second mobile terminal 100B by gradually reducing the distance (or gap) between the first mobile terminal 100A and the second mobile terminal 100B. And, the controller 180 of the second mobile terminal 100B may transmit data respective to the predetermined command to the first mobile terminal 100A through the wireless communication unit 110. For example, the data may include data indicating that the predetermined command is currently being detected through the second display unit 151B and data indicating information that was being displayed on the second display unit 151B at a point when the predetermined command has been detected through the second display unit 151B.

Meanwhile, a sensing unit 140 of the first mobile terminal 100A and/or the second mobile terminal 100B may sense that the distance (or gap) between the first display unit 151A and the second display unit 151B is gradually reduced and that a portion of the first display unit 151A and a portion of the second display unit 151B (e.g., a first area 1510A of the first display unit 151A and a second area 1510B of the second display unit 151B) overlap one another.

For example, in case the first area 1510A of the first display unit 151A and the second area 1510B of the second display unit 151B overlap one another while the predetermined signal (or command) is being detected, the controller 180 of the first mobile terminal 100A may display information 1520 associated with the second content 1320, which was being displayed on the second display unit 151B at the point when the predetermined command was detected through the second display unit 151B, on the first area 1510A based upon the data, which are transmitted from the second mobile terminal 100B. Herein, the information 1520 corresponds to information associated with the first content 1310 and the second content 1320 among the information included in the Contacts application. And, herein, for example, among the contact information registered in the Contacts application, the information may correspond to information respective to a call history with a contact included in the second content 1320 among the contact information registered in the Contacts application.

As another example, in case the first area 1510A of the first display unit 151A and the second area 1510B of the second display unit 151B overlap one another while the predetermined signal (or command) is being detected, the controller 180 of the second mobile terminal 100B may also display information 1520 associated with the second content 1320, which was being displayed on the second display unit 151B at the point when the predetermined command was detected through the second display unit 151B, on the second area 1510B.

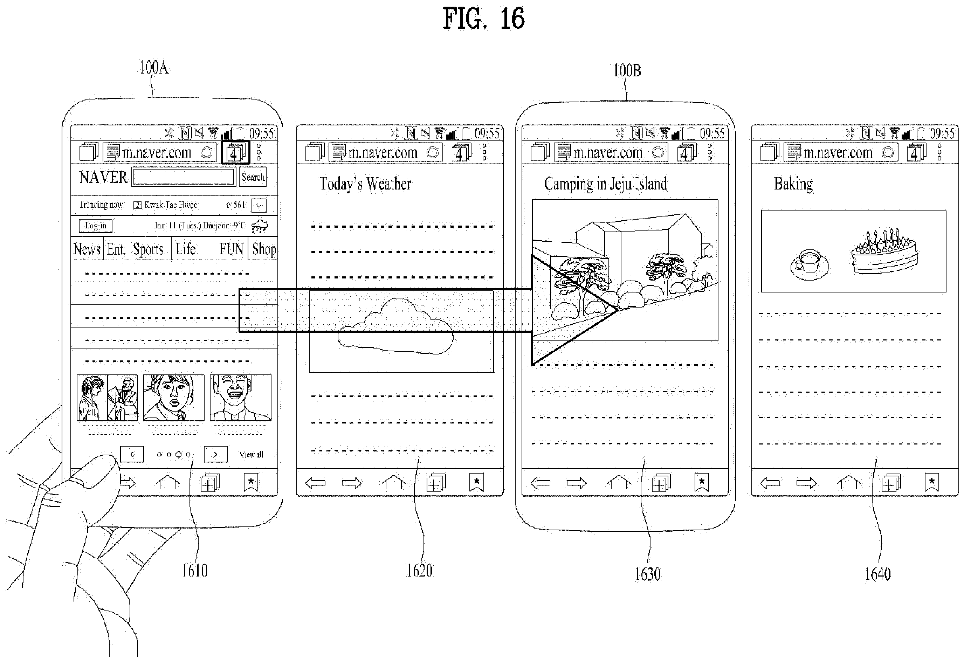

FIG. 16 illustrates another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A may display first content 1610 on the first display unit 151A, and the controller 180 of the second mobile terminal 100B may display second content 1620 to 1640 on the second display unit 151B. In case the first display unit 151A and the second display unit 151B completely overlap one another, or in case the first display unit 151A and the second display unit 151B overlap one another to a predetermined level, the first content 1610 and the second content 1620 to 1640 may be identical to one another. Additionally, in case the first display unit 151A and the second display unit 151B partially overlap one another, the display area may be expanded, and at least a portion of the first display unit 151A and at least a portion of the second display unit 151B may display information that is associated with one another yet different from one another. Furthermore, in case the first display unit 151A and the second display unit 151B are spaced apart from one another instead of overlapping one another, the display area may be expanded, and the first display unit 151A and the second display unit 151B may display information that is associated with one another yet different from one another. At this point, the information being displayed on the second display unit 151B may vary depending upon a distance (or gap) between the second display unit 151B and the first display unit 151A.

In this exemplary embodiment, the first content 1610 being displayed on the first display unit 151A and the second content 1620 to 1640 being displayed on the second display unit 151B may correspond to a Web browser application. When it is assumed that a number of webpages being activated by the Web browser application is equal to 4 pages, among the webpages that are being activated, the first content 1610 may correspond to a webpage that is currently viewed by the user, and the second content 1620 to 1640 may respectively correspond to the remaining three webpages. As the distance between the first mobile terminal 100A and the second mobile terminal 100B becomes smaller (or shorter), the controller 180 of the second mobile terminal 100B may display content corresponding to a most recently activated webpages on the second display unit 151B, and as the distance between the first mobile terminal 100A and the second mobile terminal 100B becomes larger (or longer), the controller 180 of the second mobile terminal 100B may display content corresponding to a more previously activated webpage on the second display unit 151B.

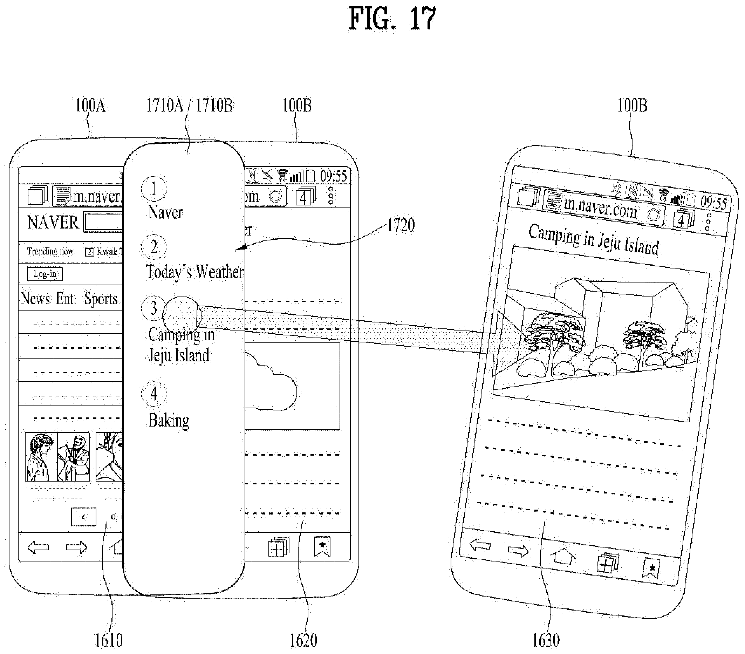

FIG. 17 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

Referring to a left side drawing of FIG. 17, the first mobile terminal 100A and the second mobile terminal 100B partially overlap one another. In this case, at least a portion of the first display unit 151A and at least a portion of the second display unit 151B (e.g., areas that do not overlap one another) may display information that is associated with one another yet different from one another. For example, the first display unit 151A displays the first content 1610, which corresponds to a webpage that is currently viewed by the user among the webpages that are activated by the Web browser application, and the second display unit 151B displays the second content 1620, which corresponds to a specific webpage among the webpages that are activated by the Web browser application. Additionally, the overlapping portion (or area) of the first display unit 151A and the second display unit 151B, i.e., at least one of a first area 1710A of the first display unit 151A and a second area 1710B of the second display unit 151B may display common information 1720. Herein, the common information 1720 corresponds to information associated with the Web browser application. For example, the common information 1720 may include information on webpages that are being activated by the Web browser application.

The controller 180 of the first mobile terminal 100A and/or the controller 180 of the second mobile terminal 100B may detect a command for selecting a specific set of information from the common information 1720. For example, the command for selecting the specific information may include at least one of a command for touching the specific information 1 time and a touch command touching the specific information and then dragging the touched information along a direction toward a center of the second display unit 151B.

Thereafter, the sensor 140 of the first mobile terminal 100A and/or the sensor 140 of the second mobile terminal 100B may detect a spacing apart (or gap) between the first display unit 151A and the second display unit 151B.

In case the first display unit 151A and the second display unit 151B are spaced apart from one another after the command for selecting the specific information is detected, the controller 180 of the second mobile terminal 100B may display second content 1630, which includes a webpage corresponding to the selected specific information, on the second display unit 151B.

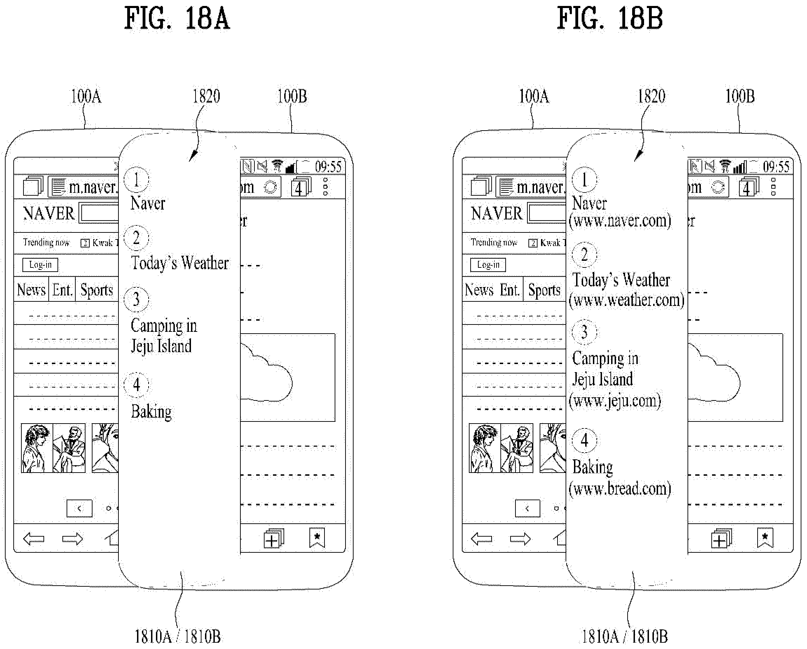

FIG. 18A and 18B illustrate an exemplary case when a change occurs in information being displayed on each display unit with respect to a level of overlapping of the two mobile terminals included in the mobile terminal system according to an exemplary embodiment of the present invention. Hereinafter, detailed description of the parts that overlap with the examples described above with reference to FIG. 17 will be omitted for simplicity.

Referring to FIG. 18A and 18B, the overlapping portion of the first display unit 151A and the second display unit 151B, i.e., at least one of a first area 1810A of the first display unit 151A and a second area 1810B of the second display unit 151B may display common information 1820. At this point, a volume (or size) of the common information 1820, which is being displayed on at least one of the first area 1810A and the second area 1810B, may vary depending upon the width or surface area of the first area 1810A and the second area 1810B.

For example, referring to FIG. 18A, in case the width or surface area of the first area 1810A and the second area 1810B is less than a predetermined level, at least one of the first area 1810A and the second area 1810B may display a name (or title) or brief information respective to each of the webpages being activated by the Web browser application as the common information 1820.

As another example, referring to FIG. 18B, in case the width or surface area of the first area 1810A and the second area 1810B is equal to or greater than a predetermined level, in addition to the name (or title) or brief information respective to each of the webpages being activated by the Web browser application, at least one of the first area 1810A and the second area 1810B may further display URL addresses respective to each webpage as the common information 1820.

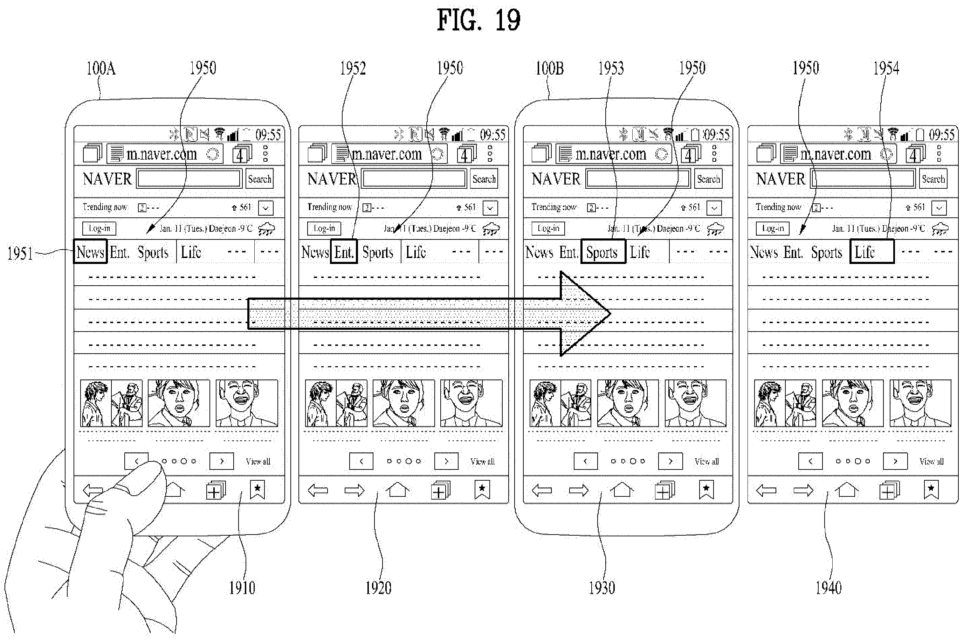

FIG. 19 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A may display first content 1910 on the first display unit 151A, and the controller 180 of the second mobile terminal 100B may display second content 1920 to 1940 on the second display unit 151B. In case the first display unit 151A and the second display unit 151B completely overlap one another, or in case the first display unit 151A and the second display unit 151B overlap one another to a predetermined level, the first content 1910 and the second content 1920 to 1940 may be identical to one another. Additionally, in case the first display unit 151A and the second display unit 151B partially overlap one another, the display area may be expanded, and at least a portion of the first display unit 151A and at least a portion of the second display unit 151B may display information that is associated with one another yet different from one another. Furthermore, in case the first display unit 151A and the second display unit 151B are spaced apart from one another instead of overlapping one another, the display area may be expanded, and the first display unit 151A and the second display unit 151B may display information that is associated with one another yet different from one another. At this point, the information being displayed on the second display unit 151B may vary depending upon a distance (or gap) between the second display unit 151B and the first display unit 151A.

In this exemplary embodiment, the first content 1910 being displayed on the first display unit 151A and the second content 1920 to 1940 being displayed on the second display unit 151B may correspond to a webpage being provided through the Web browser application. When it is assumed that a number of menu tabs 1950 included in the webpages is equal to 4 menu tabs, among the four menu tabs 1950, the first content 1910 may correspond to screen respective to a menu tab 1951, which the user is currently viewing, and the second content 1920 to 1940 may respectively correspond to display screens respective to the remaining three menu tabs 1952 to 1954. As the distance between the first mobile terminal 100A and the second mobile terminal 100B becomes smaller (or shorter), the controller 180 of the second mobile terminal 100B may display a screen respective to a menu tab located near the menu tab 1951 on the second display unit 151B, and as the distance between the first mobile terminal 100A and the second mobile terminal 100B becomes larger (or longer), the controller 180 of the second mobile terminal 100B may display a screen respective to a menu tab located further away from the menu tab 1951 on the second display unit 151B

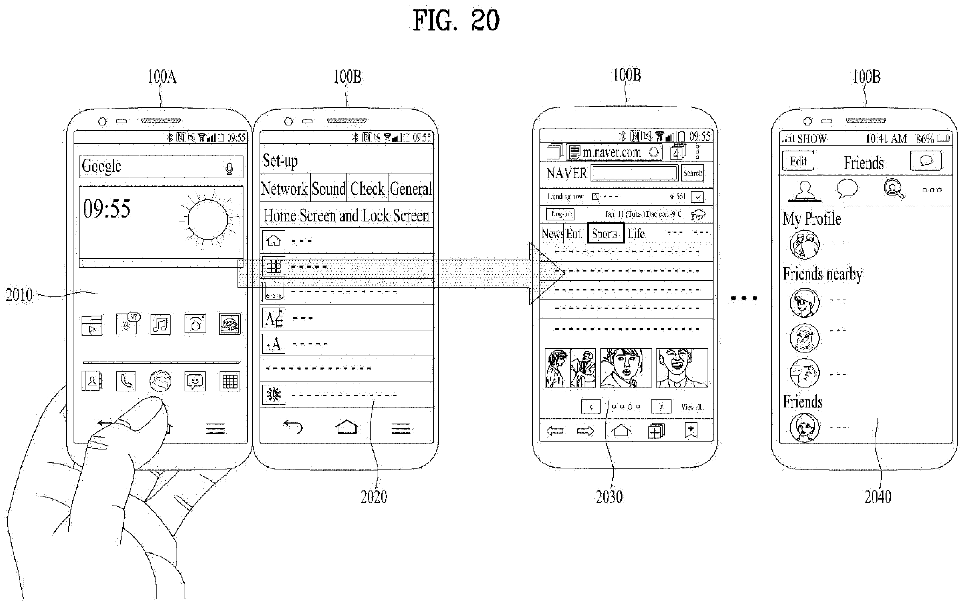

FIG. 20 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A displays first content 2010 on the first display unit 151A, and the controller 180 of the second mobile terminal 100B displays second content 2020 to 2040 on the second display unit 151B. In case the first display unit 151A and the second display unit 151B completely overlap one another, or in case the first display unit 151A and the second display unit 151B overlap one another to a predetermined level or more, the first content 2101 and the second content 2020 to 2040 may be identical to one another. Additionally, in case the first display unit 151A and the second display unit 151B partially overlap one another, the display area may be expanded, and at least a portion of the first display unit 151A and at least a portion of the second display unit 151B may display information that is associated with one another yet different from one another. Moreover, in case the first display unit 151A and the second display unit 151B are spaced apart from one another instead of overlapping one another, the display area may be expanded, the first display unit 151A and the second display unit 151B may display information that is associated with one another yet different from one another. At this point, information being displayed on the second display unit 151B may vary depending upon the distance (or gap) between the second display unit 151B and the first display unit 151A.

For example, the first content 2020 being displayed on the first display unit 151A may correspond to a first application, and the second content 2020 to 2040 being displayed on the second display unit 151B may respectively correspond each application having a history of being executed before the execution of the first application. As the distance between the first mobile terminal 100A and the second mobile terminal 100B becomes smaller (or shorter), the controller 180 of the second mobile terminal 100B may display content corresponding to an application having a history of being most recently executed on the second display unit 151B, and as the distance between the first mobile terminal 100A and the second mobile terminal 100B becomes larger (or longer), the controller 180 of the second mobile terminal 100B may display content corresponding to an application having a history of being most previously executed on the second display unit 151B.

As another example, the first content 2010 being displayed on the first display unit 151A may correspond to a screen of a first application, which is currently viewed by the user, and the second content 2020 to 2040 being displayed on the second display unit 151B may respectively correspond to screens of activated applications. As the distance between the first mobile terminal 100A and the second mobile terminal 100B becomes smaller (or shorter), the controller 180 of the second mobile terminal 100B may display content corresponding to an application that has most recently been activated on the second display unit 151B, and as the distance between the first mobile terminal 100A and the second mobile terminal 100B becomes larger (or longer), the controller 180 of the second mobile terminal 100B may display content corresponding to an application that has been previously activated on the second display unit 151B.

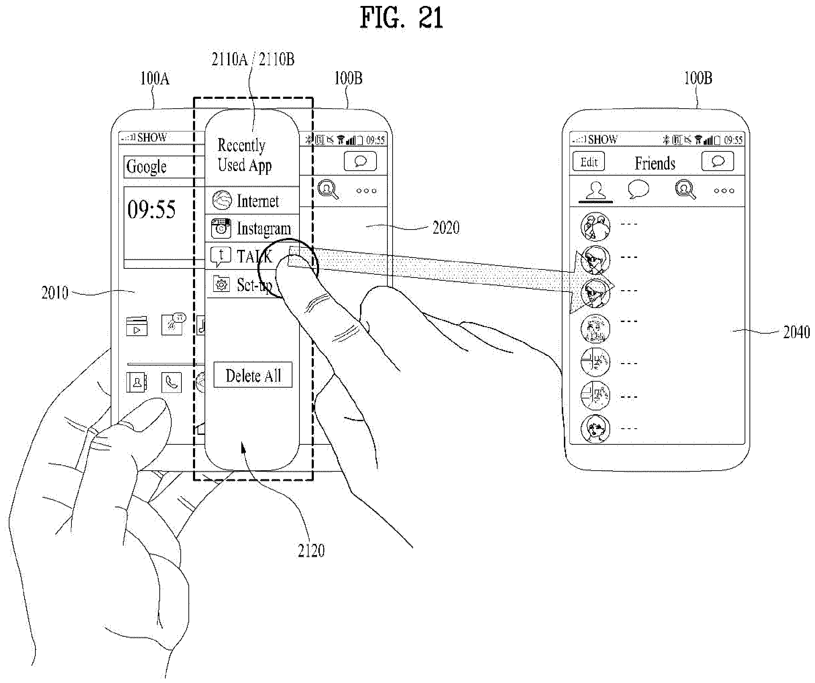

FIG. 21 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

Referring to a left side drawing of FIG. 21, the first mobile terminal 100A and the second mobile terminal 100B partially overlap one another. In this case, at least a portion of the first display unit 151A and at least a portion of the second display unit 151B (e.g., areas that do not overlap one another) may display information that is associated with one another yet different from one another. For example, the first display unit 151A displays the first content 2110, which corresponds to an execution screen of a first application that is currently being viewed by the user, among the activated applications, and the second display unit 151B displays the second content 2120, which corresponds to an execution screen of a specific application, among the activated applications. Additionally, the overlapping portion (or area) of the first display unit 151A and the second display unit 151B, i.e., at least one of a first area 2110A of the first display unit 151A and a second area 2110B of the second display unit 151B may display common information 2120. Herein, the common information 2120 corresponds to information associated with activated applications. For example, the common information 2120 may include a name (or title) of each application, and image representing each application, an icon, and so on.

The controller 180 of the first mobile terminal 100A and/or the controller 180 of the second mobile terminal 100B may detect a command for selecting a specific set of information from the common information 2120. For example, the command for selecting the specific information may include at least one of a command for touching the specific information 1 time and a touch command touching the specific information and then dragging the touched information along a direction toward a center of the second display unit 151B.

Thereafter, the sensor 140 of the first mobile terminal 100A and/or the sensor 140 of the second mobile terminal 100B may detect a spacing apart (or gap) between the first display unit 151A and the second display unit 151B.

In case the first display unit 151A and the second display unit 151B are spaced apart from one another after the command for selecting the specific information is detected, the controller 180 of the second mobile terminal 100B may display second content 2040, which includes an execution screen of the application corresponding to the selected specific information, on the second display unit 151B.

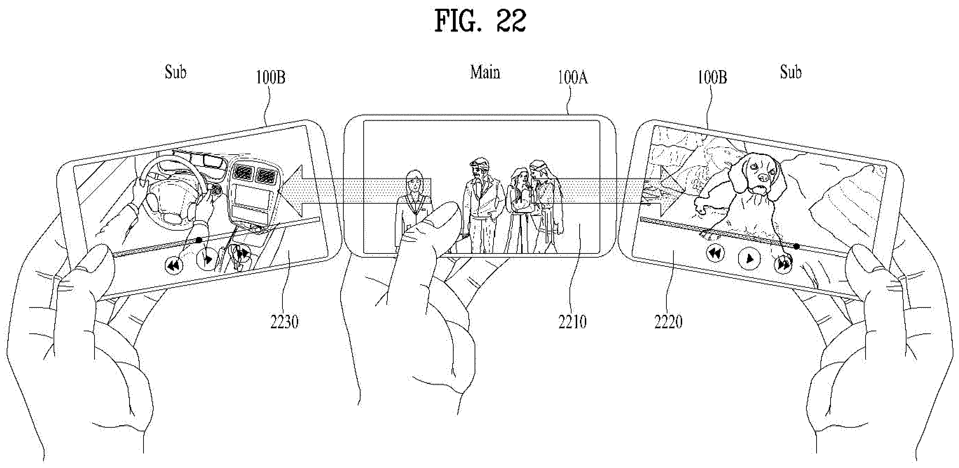

FIG. 22 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity.

The controller 180 of the first mobile terminal 100A may display first content 2210 on the first display unit 151A, and the controller 180 of the second mobile terminal 100B may display second content 2220 and 2230 on the second display unit 151B. In case the first display unit 151A and the second display unit 151B completely overlap one another, or in case the first display unit 151A and the second display unit 151B overlap one another to a predetermined level, the first content 2210 and the second content 2220 and 2230 may be identical to one another. Additionally, in case the first display unit 151A and the second display unit 151B partially overlap one another, the display area may expanded, and at least a portion of the first display unit 151A and at least a portion of the second display unit 151B may display information that is associated with one another yet different from one another. Furthermore, in case the first display unit 151A and the second display unit 151B are spaced apart from one another instead of overlapping one another, the display area may be expanded, and the first display unit 151A and the second display unit 151B may display information that is associated with one another yet different from one another. At this point, the information being displayed on the second display unit 151B may vary depending upon a distance (or gap) between the second display unit 151B and the first display unit 151A.

The sensing unit 140 of the first mobile terminal 100A and/or the second mobile terminal 100B may sense the overlapping and spacing apart (or gap) between the first mobile terminal 100A (or the first display unit 151A) and the second mobile terminal 100B (or the second display unit 151B). And, in case the first mobile terminal 100A and the second mobile terminal 100B are spaced apart from one another, the sensing unit 140 may also sense a direction of the gap (i.e., a direction along which the first mobile terminal 100A and the second mobile terminal 100B are being spaced apart from one another). Herein, the direction of the gap may signify a direction along which the second mobile terminal 100B is being spaced apart from the first mobile terminal 100A.

According to the exemplary embodiment of the present invention, the first content 2210, which is being displayed on the first display unit 151A, corresponds to a first playback time of a specific content (a specific moving picture file), and the second content 2220 and 2230, which is being displayed on the second display unit 151B, corresponds to a second playback time of the specific content. The second content 2220 and 2230 may correspond to a still image or may correspond to a moving picture image. For example, in case the second display unit 151B is spaced apart from the first display unit 151A rightward (i.e., along a right-side direction of the first display unit 151A), the controller 180 of the second mobile terminal 100B may display a content 2220, which corresponds to a playback time more forwarded than the first content 2210 in the specific content. More specifically, in case the second display unit 151B is spaced apart from the first display unit 151A along the right-side direction, this may result in an effect that is equivalent to executing a 'fast forward' function among diverse playback functions of the specific content. Depending upon the exemplary embodiment, as the second display unit 151B is being spaced apart from the first display unit 151A along the right-side direction at a faster speed, this may result in an effect of executing the 'fast forward' function at a faster speed. In case the second display unit 151B is spaced apart from the first display unit 151A leftward (i.e., along a left-side direction of the first display unit 151A), the controller 180 of the second mobile terminal 100B may display a content 2230, which corresponds to a playback time more reversed than the first content 2210 in the specific content. More specifically, in case the second display unit 151B is spaced apart from the first display unit 151A along the left-side direction, this may result in an effect that is equivalent to executing a 'fast reverse' function among diverse playback functions of the specific content. Depending upon the exemplary embodiment, as the second display unit 151B is being spaced apart from the first display unit 151A along the left-side direction at a faster speed, this may result in an effect of executing the 'fast reverse' function at a faster speed.

According to this exemplary embodiment, by changing the position of the second mobile terminal 10B with respect to the first mobile terminal 100A, when viewing a specific content, the user may be capable of verifying sections of the content that have already been played or sections of the content that are to be played by using an intuitive method.

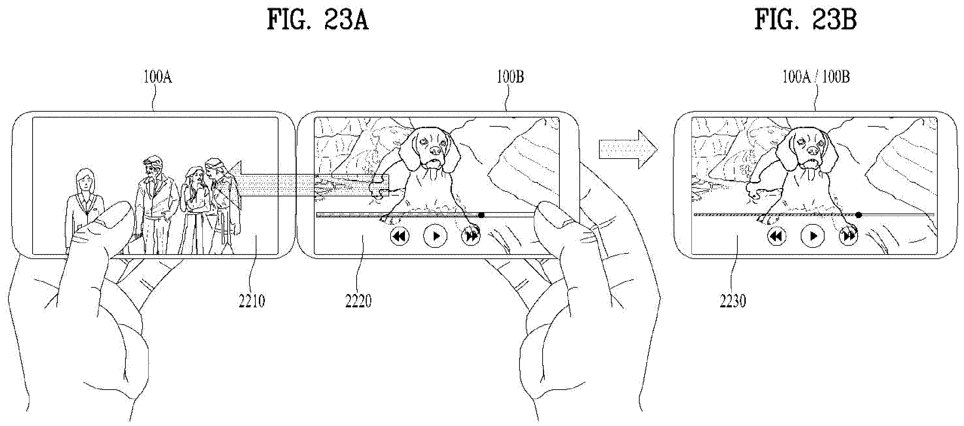

FIG. 23A and 23B illustrate yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the examples described above with reference to FIG. 22 will be omitted for simplicity.

Referring to FIG. 23A, the first display unit 151A and the second display unit 151B are spaced apart from one another. The first display unit 151A may display first content 2210, which corresponds to a first playback time of a specific moving picture file, and the second display unit 151B may second content 2220, which corresponds to a second playback time of a specific moving picture file.

While touching an arbitrary area of the second display unit 151B, the user may gradually reduce the distance (or gap) between the second mobile terminal 100B and the first mobile terminal 100A, thereby positioning the first mobile terminal 100A and the second mobile terminal 100B so that the mobile terminals 100A and 100B can overlap one another, as shown in FIG. 23B. Accordingly, the first mobile terminal 100A and the second mobile terminal 100B may completely overlap one another, or the first mobile terminal 100A and the second mobile terminal 100B may overlap one another to a predetermined level or more.

The controller 180 of the second mobile terminal 100B may detect a predetermined command of touching an arbitrary (or random) area of the second display unit 151B, and, then, the controller 180 of the second mobile terminal 100B may transmit data corresponding to the predetermined command to the first mobile terminal 100A through the wireless communication unit 110. For example, the data may include data indicating that the predetermined command is currently being detected through the second display unit 151B and data indicating information (the second content 2220) that was being displayed on the second display unit 151B at a point when the predetermined command has been detected through the second display unit 151B.

When the overlapping (overlapping of the predetermined level or more) between the first display unit 151A and the second display unit 151B is detected, the controller 180 of the first mobile terminal 100A or the controller 180 of the second mobile terminal 100B may playback the specific moving picture image from the second content 2220 corresponding to the point when the predetermined command is detected.

According to this exemplary embodiment, the user may navigate the content of the specific moving picture file by spacing the second mobile terminal 100B apart from the first mobile terminal 100A, and, then, the user may view the specific moving picture file starting from the playback point by overlapping the first mobile terminal 100A and the second mobile terminal 100B.

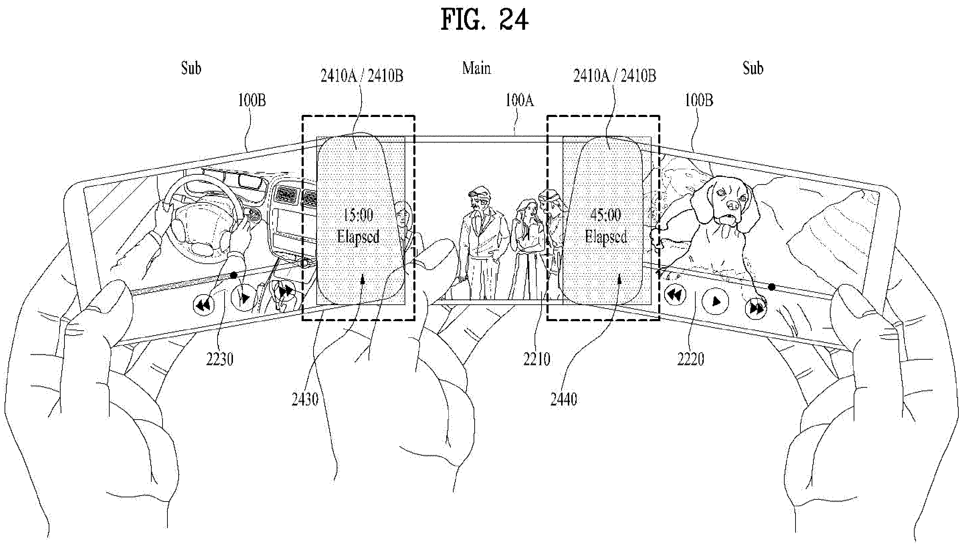

FIG. 24 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the examples described above with reference to FIG. 22 and FIG. 23 will be omitted for simplicity.

Referring to FIG. 24, the first display unit 151A and the second display unit 151B partially overlap one another. More specifically, referring to FIG. 24, it will be assumed that the second display unit 151B overlaps with a left side area of the first display unit 151A, and it will also be assumed that a first area 2410A of the first display unit 151A and a second area 2410B of the second display unit 151B overlap one another. Additionally, referring to FIG. 24, it will be assumed that the second display unit 151B overlaps with a right side area of the first display unit 151A, and it will also be assumed that a third area 2420A of the first display unit 151A and a fourth area 2420B of the second display unit 151B overlap one another.

In case the first display unit 151A and the second display unit 151B partially overlap one another, the overlapping portion may display common information, which is associated with the first content 2210 being displayed on the first display unit 151A, and which is also associated with the second content 2220 and 2230 being displayed on the second display unit 151B.

For example, referring to FIG. 24, at least one of the first area 2410A of the first display unit 151A and the second area 2410B of the second display unit 151B may output time information 2430 on a time section starting from a beginning (or playback start point) of the specific moving picture file up to a playback point corresponding to the first content 2210 within the total playback time of the specific moving picture file. Meanwhile, referring to FIG. 24, at least one of the third area 2420A of the first display unit 151A and the fourth area 2420B of the second display unit 151B may output time information 2440 on a time section starting from a playback point corresponding to the first content 2210 up to an end (or playback end point) of the specific moving picture file within the total playback time of the specific moving picture file.

Depending upon the exemplary embodiment of the present invention, the information being displayed (or indicated) on the overlapping portion (or area) may include a playback list (or play list). However, the present invention will not be limited only to this.

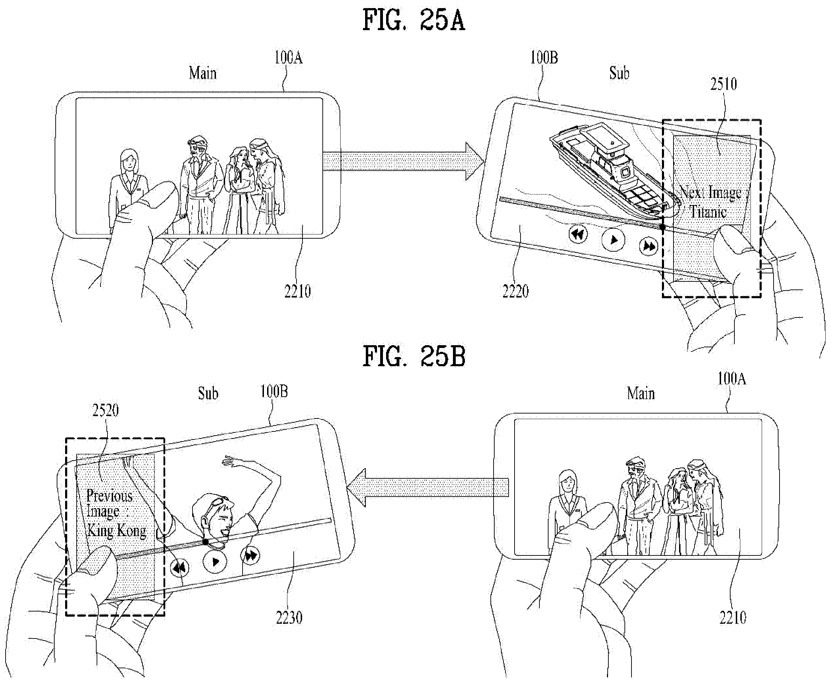

FIG. 25A and 25B illustrate yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the examples described above with reference to FIG. 22 to FIG. 24 will be omitted for simplicity.

Referring to FIG. 25A and 25B, the first display unit 151A and the second display unit 151B are spaced apart from one another. And, the first display unit 151A may display first content 2210 corresponding to a first playback time of a specific moving picture file, and the second display unit 151B may display second content 2220 corresponding to a second playback time of the specific moving picture file.

More specifically, FIG. 25A corresponds to an exemplary case of the second display unit 151B being spaced apart from the first display unit 151A rightward (i.e., along a right-side direction of the first display unit 151A). Herein, the controller 180 of the second mobile terminal 100B may display a content 2220, which corresponds to a playback time more forwarded than the first content 2210 in the specific content. And, in case the distance (or gap) from which the second display unit 151B is spaced apart rightward from the first display unit 151A is equal to or greater than a predetermined level, the controller 180 of the second mobile terminal 100B may display information 2510 on a moving picture file that is to be displayed after the specific moving picture file (or that is positioned immediately after the specific moving picture file within the playback list) on the second display unit 151B. For example, the information 2510 may be displayed on a right-side edge portion (or area) of the second display unit 151B.

Meanwhile, FIG. 25B corresponds to an exemplary case of the second display unit 151B being spaced apart from the first display unit 151A leftward (i.e., along a left-side direction of the first display unit 151A). Herein, the controller 180 of the second mobile terminal 100B may display a content 2230, which corresponds to a playback time more reversed than the first content 2210 in the specific content. And, in case the distance (or gap) from which the second display unit 151B is spaced apart leftward from the first display unit 151A is equal to or greater than a predetermined level, the controller 180 of the second mobile terminal 100B may display information 2520 on a moving picture file that has been displayed before the specific moving picture file (or that is positioned immediately before the specific moving picture file within the playback list) on the second display unit 151B. For example, the information 2520 may be displayed on a left-side edge portion (or area) of the second display unit 151B.

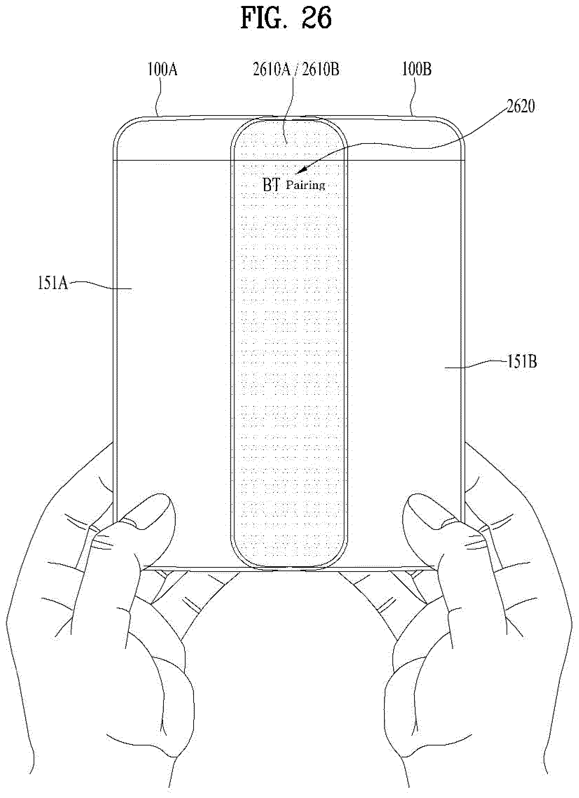

FIG. 26 illustrates yet another exemplary case when a change occurs in information being displayed on each display unit with respect to overlapping or spacing apart of the two mobile terminals included in the mobile terminal system according to an exemplary embodiment of the present invention. Hereinafter, detailed description of the parts that overlap with the above-described examples will be omitted for simplicity. In this exemplary embodiment, the first mobile terminal 100A and the second mobile terminal 100B may both belong to the same user, or the first mobile terminal 100A and the second mobile terminal 100B may each belong to a different user.

Referring to FIG. 26, the first mobile terminal 100A and the second mobile terminal 100B may partially overlap one another, and, herein, a first area 2610A of the first display unit 151A and a second area 2610B of the second display unit 151B may overlap one another. The sensor 140 of the first mobile terminal 100A and/or the second mobile terminal 100B may sense that the first display unit 151A and the second display unit 151B partially overlap one another to a predetermined level.

According to this exemplary embodiment of the present invention, on case the first display unit 151A and the second display unit 151B partially overlap one another, a wireless communication connection may be established between the first display unit 151A and the second display unit 151B.

For example, in case the overlapping between the first mobile terminal 100A and the second mobile terminal 100B is sensed (or detected), the controller 180 of the first mobile terminal 100A activates the short-range communication unit 114, and, then, the controller 180 of the first mobile terminal 100A may control the wireless communication unit 110, so that a first signal requesting for a short-range communication connection can be transmitted to the second mobile terminal 100B. Thereafter, in accordance with the first signal, the controller 180 of the second mobile terminal 100B may control the wireless communication unit 110, so that a second signal accepting the short-range communication connection can be transmitted to the first mobile terminal 100A. Accordingly, a short-range communication connection may be established between the first mobile terminal 100A and the second mobile terminal 100B.

As another example, in case the overlapping between the first mobile terminal 100A and the second mobile terminal 100B is sensed (or detected), the controller 180 of the second mobile terminal 100B activates the short-range communication unit 114, and, then, the controller 180 of the second mobile terminal 100B may control the wireless communication unit 110, so that a first signal requesting for a short-range communication connection can be transmitted to the first mobile terminal 100A. Thereafter, in accordance with the first signal, the controller 180 of the first mobile terminal 100A may control the wireless communication unit 110, so that a second signal accepting the short-range communication connection can be transmitted to the second mobile terminal 100B. Accordingly, a short-range communication connection may be established between the first mobile terminal 100A and the second mobile terminal 100B.

Depending upon the exemplary embodiments, information 2620 indicating that a wireless communication connection is currently established between the first mobile terminal 100A and the second mobile terminal 100B may be displayed in at least one of the first area 2610A of the first display unit 151A and the second area 2610B of the second display unit 151B.

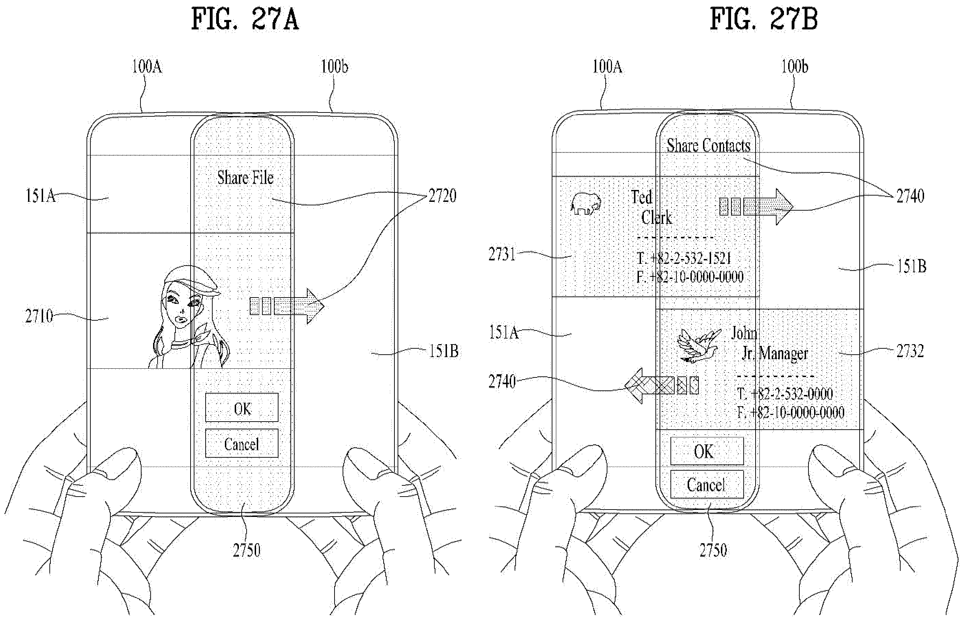

FIG. 27A and 27B illustrate an exemplary method for transmitting and/or receiving (or transceiving) data between two mobile terminals with respect to overlapping or spacing apart of the two mobile terminals included in the mobile terminal system according to an exemplary embodiment of the present invention. Hereinafter, detailed description of the parts that overlap with the above-described examples will be omitted for simplicity.

Referring to FIG. 27A and 27B, the first mobile terminal 100A and the second mobile terminal 100B may partially overlap with one another. The sensing unit 140 of the first mobile terminal 100A and/or the second mobile terminal 100B may sense that the first display unit 151A and the second display unit 151B are overlapping with one another within a predetermined range.

According to this exemplary embodiment, in case the first mobile terminal 100A and the second mobile terminal 100B partially overlap one another, the first mobile terminal 100A and the second mobile terminal 100B may share specific data. For example, specific data may be transmitted to the second mobile terminal 100B from the first mobile terminal 100A, and specific data may also be transmitted to the first mobile terminal 100A from the second mobile terminal 100B. Depending upon the exemplary embodiment, in case a short-range wireless communication is not established between the first mobile terminal 100A and the second mobile terminal 100B, when first mobile terminal 100A and the second mobile terminal 100B partially overlap one another, a process of establishing a short-range wireless communication connection between the first mobile terminal 100A and the second mobile terminal 100B may be performed prior to sharing the specific data. Since process is similar to the process described above with reference to FIG. 26, detailed description of the same will be omitted for simplicity.

Referring to FIG. 27A, the controller 180 of the first mobile terminal 100A may display first information 2710 corresponding to a first data file to the first display unit 151A. Among data files stored in a memory 170 and data files received from an external server, the user of the first mobile terminal 100A may select a first data file he (or she) wishes to share with the second mobile terminal 100B. And, the controller 180 of the first mobile terminal 100A may display first information 2710 corresponding to the selected first data file on the first display unit 151A. The selection of the data file and the display of the first information 2710 may be performed prior to the overlapping between the first mobile terminal 100A and the second mobile terminal 100B, or may be performed during the overlapping between the first mobile terminal 100A and the second mobile terminal 100B, or after the overlapping between the first mobile terminal 100A and the second mobile terminal 100B.

Thereafter, in case the overlapping between the first display unit 151A and the second display unit 151B is detected, the controller 180 of the first mobile terminal 100A may control the wireless communication unit 110 so that the first data file corresponding to the first information 2710 can be transmitted to the second mobile terminal 100B. The second mobile terminal 100B may receive the first data file from the first mobile terminal 100A, and, then, the second mobile terminal 100B may store the received first data file in the memory 170.

Information 2720 for notifying the transmission (or sharing) of the data file may be displayed on the portion (or section) where the first display unit 151A and the second display unit 151B overlap one another. For example, the information 2720 may include at least one of a text, an indicator, a graphic, and a message. The information 2720 may be displayed on at least one of an area of the first display unit 151A that overlaps with the second display unit 151B and an area of the second display unit 151B that overlaps with the first display unit 151A.

Meanwhile, referring to FIG. 27B, the controller 180 of the first mobile terminal 100A may display first information 2731 corresponding to a first data file on the first display unit 151A, and the controller 180 of the second mobile terminal 100B may display second information 2732 corresponding to a second data file on the second display unit 151B. Among data files stored in a memory 170 and data files received from an external server, the user of the first mobile terminal 100A may select a first data file he (or she) wishes to share with the second mobile terminal 100B. And, among data files stored in a memory 170 and data files received from an external server, the user of the second mobile terminal 100B may select a second data file he (or she) wishes to share with the first mobile terminal 100A. Depending upon the exemplary embodiment, the user of the first mobile terminal 100A and the user of the second mobile terminal 100B may correspond to the same person.

Thereafter, in case the overlapping between the first display unit 151A and the second display unit 151B is detected, the controller 180 of the first mobile terminal 100A may control the wireless communication unit 110 so that the first data file corresponding to the first information 2731 can be transmitted to the second mobile terminal 100B. And, in case the overlapping between the first display unit 151A and the second display unit 151B is detected, the controller 180 of the second mobile terminal 100B may control the wireless communication unit 110 so that the second data file corresponding to the second information 2732 can be transmitted to the first mobile terminal 100A. The first mobile terminal 100A may receive the second data file from the second mobile terminal 100B, and, then, the first mobile terminal 100A may store the received second data file in the memory 170. And, the second mobile terminal 100B may receive the first data file from the first mobile terminal 100A, and, then, the second mobile terminal 100B may store the received first data file in the memory 170.

Information 2740 for notifying the transmission (or sharing) of the data file may be displayed on the portion (or section) where the first display unit 151A and the second display unit 151B overlap one another. For example, the information 2740 may include at least one of a text, an indicator, a graphic, and a message. The information 2740 may be displayed on at least one of an area of the first display unit 151A that overlaps with the second display unit 151B and an area of the second display unit 151B that overlaps with the first display unit 151A.

Meanwhile, according to the exemplary embodiment of the present invention, a menu option 2750 for cancelling the transmission (or sharing) of a data file may be displayed on the overlapping portion (or area) of the first display unit 151A and the second display unit 151B. Herein, the menu option 2750 may be displayed on at least one of an area of the first display unit 151A that overlaps with the second display unit 151B and an area of the second display unit 151B that overlaps with the first display unit 151A.

According to the above-described exemplary embodiments of the present invention, a mobile terminal system and a method for controlling the same, wherein the mobile terminal system can provide more useful information to users by using at least two mobile terminals each being equipped with a transparent display, and wherein the mobile terminal system can provide intuitive user experience and user interface respective to whether or not at least two mobile terminals each being equipped with a transparent display are overlapping one another or being spaced apart from one another, may be provided.

As described above, the present invention may be implemented as a computer-readable code in a program-recorded medium. Herein, a computer-readable medium includes all types of recording devices having data, which can be read by a computer system, stored therein. Examples of the computer-readable storage medium may include a Hard Disk Drive (HDD), a Solid State Disk (SSD), a Silicon Disk Drive (SDD), a ROM, a RAM, a CD-ROM, an electro-magnetic tape, a floppy disk, an optical data storage device, and so on. Additionally, the computer-readable storage medium may also include storage media that can be realized in the form of carrier waves (e.g., transmission via the Internet). Furthermore, the computer may include the controller 180 of the user terminal. Accordingly, in every aspect, the detailed description of the present invention that is presented above shall not be interpreted with limitations and shall be considered as examples.

## Claims

1. A mobile terminal system, comprising:
a first mobile terminal (100A) including a first transparent display (151A), a first sensing unit (140A), and a first processor ;
a second mobile terminal (100B) including a second transparent display (151B), a second sensing unit, and a second processor;
wherein at least one of the first sensing unit (140A) and the second sensing unit (140B) is configured to sense overlapping and spacing apart between the first transparent display (151A) and the second transparent display (151B); and
wherein the first processor is configured to display a first content on the first transparent display (151A), and the second processor is configured to display a second content on the second transparent display (151B),
wherein the second content being displayed on the second transparent display (151B) is changed with respect to an overlapping level and a distance between the first transparent display (151A) and the second transparent display (151B), the overlapping level and distance being sensed by the at least one of the first sensing unit (140A) and the second sensing unit (140B),
**characterized in that**, in case a first area of the first transparent display (151A) and a second area of the second transparent display (151B) overlap one another, the first processor and the second processor are further configured to display common information on at least one of the first area and the second area while maintaining displaying the first content on a non-overlapped area of the first transparent display (151A) and maintaining displaying the second content on a non-overlapped area of the second transparent display (151B), wherein the common information is additional information associated with the first content and the second content.

2. The mobile terminal system of claim 1, wherein a volume of the common information being displayed on at least one of a first area and a second area varies depending upon a width or surface area of the overlapping first area and second area.

3. The mobile terminal system of any one of claims 1 or 2, wherein the second processor is further configured to:
display second content based upon the first content on the second transparent display (151B).

4. The mobile terminal system of claim 3, wherein the first content and the second content correspond to a same application.

5. The mobile terminal system of claim 3, wherein the first content corresponds to a first application, and wherein the second content corresponds to a second application that had been executed prior to an execution of the first application.

6. The mobile terminal system of claim 3, wherein the first content corresponds to a first function of a first application, and wherein the second content corresponds to a second function of the first application.

7. The mobile terminal system of claim 3, wherein the first content corresponds to a first playback time of a specific moving picture file, and wherein the second content corresponds to a second playback time of the specific moving picture file.

8. The mobile terminal system of any one of claims 1 to 7, wherein at least one of the first processor and the second processor is further configured to:
detect a predetermined touch signal through the second transparent display, and
display the information being consistently maintained regardless of a distance between the first transparent display (151A) and the second transparent display (151B), in a state of having the predetermined touch signal detected.

9. The mobile terminal system of claim 1, wherein the second processor is further configured to:
detect a predetermined touch signal through the second transparent display unit (151B) and, transmit data corresponding to the predetermined touch signal to the first mobile terminal, and
the first processor is further configured to:
in case a first area of the first transparent display (151A) and a second area of the second transparent display (151B) overlap one another in a state of having the predetermined touch signal detected, display information associated with the information being displayed on the second transparent display (151B) on the first area.

10. The mobile terminal system of claim 1, wherein, in case the second transparent display (151B) is spaced apart from the first transparent display (151A) after detecting a predetermined command for selecting a portion of the common information, at least one of the first processor and the second processor is further configured to display content corresponding to the selected portion of the information.

11. The mobile terminal system of claim 10, wherein the predetermined command comprises at least one of a touch command touching a portion of the common information one time, the portion of the common information being displayed on any one of the first area and the second area, and a touch command touching a portion of the common information one time, the portion of the common information being displayed on any one of the first area and the second area and dragging the touched portion of the common information along a direction toward a center of the second transparent display (151B).

12. The mobile terminal system of claim 10 wherein at least one of the first processor and the second processor is further configured to sense the predetermined command and the space between the first transparent display (151A) and the second transparent display (151B) by at least one of the first sensing unit (140A) and the second sending unit (140B).

13. A method of controlling a mobile terminal system comprising a first mobile terminal (100A) including a first transparent display (151A), a first sensing unit (140A), and a first processor, second mobile terminal (100B) including a second transparent display (151B), a second sensing unit, and a second processor, the method comprising the steps of:
displaying a first content on the first transparent display (151A) and a second content on the second transparent display (151B); and
sensing an overlapping and spacing apart between the first transparent display (151A) and the second transparent display (151B), wherein the second content being displayed on the second transparent display unit (151B) is changed with respect to an overlapping level and a distance between the first transparent display (151A) and the second transparent display (151B), the overlapping level and distance being sensed by at least one of the first sensing unit (140A) and the second sensing unit (140B); and **characterized in that**
in case a first area of the first transparent display (151A) and a second area of the second transparent display (151B) overlap one another, displaying common information on at least one of the first area and the second area while maintaining displaying the first content on a non-overlapped area of the first transparent display (151A) and maintaining displaying the second content on a non-overlapped area of the second transparent display (151B), wherein the common information is additional information associated with the first content and the second content.

## Patentansprüche

1. Mobiles Endgerätesystem, das aufweist:
ein erstes mobiles Endgerät (100A), das eine erste transparente Anzeige (151A), eine erste Abtasteinheit (140A) und einen ersten Prozessor umfasst;
ein zweites mobiles Endgerät (100B), das eine zweite transparente Anzeige (151B), eine zweite Abtasteinheit und einen zweiten Prozessor umfasst;
wobei wenigstens eine der ersten Abtasteinheit (140A) und der zweiten Abtasteinheit (140B) konfiguriert ist, um eine Überlappung und Beabstandung zwischen der ersten transparenten Anzeige (151A) und der zweiten transparenten Anzeige (151B) abzutasten; und
wobei der erste Prozessor konfiguriert ist, um einen ersten Inhalt auf der ersten transparenten Anzeige (151A) anzuzeigen, und der zweite Prozessor konfiguriert ist, um einen zweiten Inhalt auf der zweiten transparenten Anzeige (151B) anzuzeigen,
wobei der zweite Inhalt, der auf der zweiten transparenten Anzeige (151B) angezeigt wird, in Bezug auf einen Überlappungspegel und einen Abstand zwischen der ersten transparenten Anzeige (151A) und der zweiten transparenten Anzeige (151B) geändert wird, wobei der Überlappungspegel und der Abstand durch die erste Abtasteinheit (140A) und/oder die zweite Abtasteinheit (140B) abgetastet wird/werden,
**dadurch gekennzeichnet, dass** in dem Fall, in dem ein erster Bereich der ersten transparenten Anzeige (151A) und ein zweiter Bereich der zweiten transparenten Anzeige (151B) einander überlappen, der erste Prozessor und der zweite Prozessor konfiguriert sind, um allgemeine Informationen auf dem ersten Bereich und/oder dem zweiten Bereich anzuzeigen, während die Anzeige des ersten Inhalts auf einem nicht überlappten Bereich der ersten transparenten Anzeige (151A) aufrechterhalten wird und die Anzeige des zweiten Inhalts auf einem nicht überlappten Bereich der zweiten transparenten Anzeige (151B) aufrechterhalten wird, wobei die allgemeinen Informationen zusätzliche Informationen sind, die zu dem ersten Inhalt und dem zweiten Inhalt gehören.

2. Mobiles Endgerätesystem nach Anspruch 1, wobei ein Volumen der allgemeinen Informationen, die auf einem ersten Bereich und/oder einem zweiten Bereich angezeigt werden, sich abhängig von einer Breite oder Oberfläche des überlappenden ersten Bereichs und zweiten Bereichs ändern.

3. Mobiles Endgerätesystem nach einem der Ansprüche 1 oder 2, wobei
der zweite Prozessor ferner konfiguriert ist, um:
den zweiten Inhalt basierend auf dem ersten Inhalt auf der zweiten transparenten Anzeige (151B) anzuzeigen.

4. Mobiles Endgerätesystem nach Anspruch 3, wobei der erste Inhalt und der zweite Inhalt einer gleichen Anwendung entsprechen.

5. Mobiles Endgerätesystem nach Anspruch 3, wobei der erste Inhalt einer ersten Anwendung entspricht, und wobei der zweite Inhalt einer zweiten Anwendung entspricht, die vor einer Ausführung der ersten Anwendung ausgeführt wurde.

6. Mobiles Endgerätesystem nach Anspruch 3, wobei der erste Inhalt einer ersten Funktion einer ersten Anwendung entspricht, und der zweite Inhalt einer zweiten Funktion der ersten Anwendung entspricht.

7. Mobiles Endgerätesystem nach Anspruch 3, wobei der erste Inhalt einer ersten Wiedergabezeit einer spezifischen Bewegtbilddatei entspricht und der zweite Inhalt einer zweiten Wiedergabezeit der spezifischen Bewegtbilddatei entspricht.

8. Mobiles Endgerätesystem nach einem der Ansprüche 1 bis 7, wobei der erste Prozessor und/oder der zweite Prozessor ferner konfiguriert ist/sind, um:
ein vorgegebenes Berührungssignal durch die zweite transparente Anzeige zu erfassen, und
die Informationen, die beständig aufrechterhalten werden, ungeachtet eines Abstands zwischen der ersten transparenten Anzeige (151A) und der zweiten transparenten Anzeige (151B) in einem Zustand, in dem das vorgegebene Berührungssignal erfasst wurde, anzuzeigen.

9. Mobiles Endgerätesystem nach Anspruch 1, wobei der zweite Prozessor ferner konfiguriert ist, um:
ein vorgegebenes Berührungssignal durch die zweite transparente Anzeigeeinheit (151B) zu erfassen, Daten, die dem vorgegebenen Berührungssignal entsprechen, an das erste mobile Endgerät zu übertragen, und
wobei der erste Prozessor ferner konfiguriert ist, um:
falls ein erster Bereich der ersten transparenten Anzeige (151A) und ein zweiter Bereich der zweiten transparenten Anzeige (151B) einander in einem Zustand, in dem das vorgegebene Berührungssignal erfasst wurde, überlappen, Informationen, die zu den Informationen gehören, die auf der zweiten transparenten Anzeige (151B) angezeigt werden, auf dem ersten Bereich anzuzeigen.

10. Mobiles Endgerätesystem nach Anspruch 1, wobei in einem Fall, in dem die zweite transparente Anzeige (151b) von der ersten transparenten Anzeige (151A) beabstandet ist, nachdem ein vorgegebener Befehl für die Auswahl eines Teils der gemeinsamen Informationen erfasst wurde, der erste Prozessor und/oder der zweite Prozessor ferner konfiguriert ist/sind, um Inhalt anzuzeigen, der dem ausgewählten Teil der Informationen entspricht.

11. Mobiles Endgerätesystem nach Anspruch 10, wobei der vorgegebene Befehl wenigstens einen der folgenden aufweist: einen Berührungsbefehl, der einen Teil der allgemeinen Informationen einmal berührt, wobei der Teil der allgemeinen Informationen auf einem beliebigen des ersten Bereichs und des zweiten Bereichs angezeigt wird, und einen Berührungsbefehl, der einen Teil der allgemeinen Informationen einmal berührt, wobei der Teil der allgemeinen Informationen auf einem beliebigen des ersten Bereichs und des zweiten Bereichs angezeigt wird, und den berührten Teil der allgemeinen Informationen entlang einer Richtung zu einer Mitte der zweiten transparenten Anzeige (151B) zieht.

12. Mobiles Endgerätesystem nach Anspruch 10, wobei der erste Prozessor und/oder der zweite Prozessor ferner konfiguriert ist/sind, um den vorgegebenen Befehl und den Zwischenraum zwischen der ersten transparenten Anzeige (151A) und der zweiten transparenten Anzeige (151B) durch die erste Abtasteinheit (140A) und/oder die zweite Abtasteinheit (140B) abzutasten.

13. Verfahren zur Steuerung eines mobilen Endgerätesystems, das ein erstes mobiles Endgerät (100A), das eine erste transparente Anzeige (151A), eine erste Abtasteinheit (140A) und einen ersten Prozessor umfasst, ein zweites mobiles Endgerät (100B), das eine zweite transparente Anzeige (151B), eine zweite Abtasteinheit und einen zweiten Prozessor umfasst, aufweist, wobei das Verfahren die folgenden Schritte aufweist:
Anzeigen eines ersten Inhalts auf der ersten transparenten Anzeige (151A) und eines zweiten Inhalts auf der zweiten transparenten Anzeige (151B);
Abtasten einer Überlappung und Beabstandung zwischen der ersten transparenten Anzeige (151A) und der zweiten transparenten Anzeige (151B), wobei der zweite Inhalt, der auf der zweiten transparenten Anzeige (151B) angezeigt wird, in Bezug auf einen Überlappungspegel und einen Abstand zwischen der ersten transparenten Anzeige (151A) und der zweiten transparenten Anzeige (151B) geändert wird, wobei der Überlappungspegel und der Abstand durch die erste Abtasteinheit (140A) und/oder die zweite Abtasteinheit (140B) abgetastet wird/werden,
**dadurch gekennzeichnet, dass** in dem Fall, in dem ein erster Bereich der ersten transparenten Anzeige (151A) und ein zweiter Bereich der zweiten transparenten Anzeige (151B) einander überlappen, allgemeine Informationen auf dem ersten Bereich und/oder dem zweiten Bereich angezeigt werden, während die Anzeige des ersten Inhalts auf einem nicht überlappten Bereich der ersten transparenten Anzeige (151A) aufrechterhalten wird und die Anzeige des zweiten Inhalts einem dem nicht überlappten Bereich der zweiten transparenten Anzeige (151B) aufrechterhalten wird, wobei die allgemeinen Informationen zusätzliche Informationen sind, die zu dem ersten Inhalt und dem zweiten Inhalt gehören.

## Revendications

1. Système de terminal mobile comprenant :
un premier terminal mobile (100A) incluant un premier dispositif d'affichage transparent (151A), une première unité de détection (140A) et un premier processeur ;
un second terminal mobile (100B) incluant un second dispositif d'affichage transparent (151B), une seconde unité de détection et un second processeur ;
dans lequel au moins l'une de la première unité de détection (140A) et la seconde unité de détection (140B) est configurée pour détecter un chevauchement et un espacement entre le premier dispositif d'affichage transparent (151A) et le second dispositif d'affichage transparent (151B) ; et
dans lequel le premier processeur est configuré pour afficher un premier contenu sur le premier dispositif d'affichage transparent (151A) et le second processeur est configuré pour afficher un second contenu sur le second dispositif d'affichage transparent (151B),
dans lequel le second contenu qui est affiché sur le second dispositif d'affichage transparent (151B) est changé par rapport à un niveau de chevauchement et une distance entre le premier dispositif d'affichage transparent (151A) et le second dispositif d'affichage transparent (151B), le niveau de chevauchement et la distance étant détectés par l'au moins une de la première unité de détection (140A) et la seconde unité de détection (140B),
**caractérisé en ce que**, dans un cas où une première zone du premier dispositif d'affichage transparent (151A) et une seconde zone du second dispositif d'affichage transparent (151B) se chevauchent entre elles, le premier processeur et le second processeur sont configurés en outre pour afficher des informations communes sur au moins l'une de la première zone et la seconde zone tout en maintenant l'affichage du premier contenu sur une zone sans chevauchement du premier dispositif d'affichage transparent (151A) et en maintenant l'affichage du second contenu sur une zone sans chevauchement du second dispositif d'affichage transparent (151B), dans lequel les informations communes sont des informations additionnelles associées au premier contenu et au second contenu.

2. Système de terminal mobile selon la revendication 1, dans lequel un volume des informations communes qui sont affichées sur au moins l'une d'une première zone et d'une seconde zone varie en fonction d'une largeur ou d'une superficie de la première zone et de la seconde zone se chevauchant.

3. Système de terminal mobile selon l'une quelconque des revendications 1 ou 2, dans lequel le second processeur est configuré en outre pour :
afficher un second contenu sur la base du premier contenu sur le second dispositif d'affichage transparent (151B).

4. Système de terminal mobile selon la revendication 3, dans lequel le premier contenu et le second contenu correspondent à une même application.

5. Système de terminal mobile selon la revendication 3, dans lequel le premier contenu correspond à une première application et dans lequel le second contenu correspond à une seconde application qui avait été exécutée avant une exécution de la première application.

6. Système de terminal mobile selon la revendication 3, dans lequel le premier contenu correspond à une première fonction d'une première application et dans lequel le second contenu correspond à une seconde fonction de la première application.

7. Système de terminal mobile selon la revendication 3, dans lequel le premier contenu correspond à un premier temps de lecture d'un fichier d'image animée spécifique et dans lequel le second contenu correspond à un second temps de lecture du fichier d'image animée spécifique.

8. Système de terminal mobile selon l'une quelconque des revendications 1 à 7, dans lequel au moins l'un du premier processeur et du second processeur est configuré en outre pour :
détecter un signal tactile prédéterminé par le biais du second dispositif d'affichage transparent, et
afficher les informations qui sont maintenues de manière cohérente indépendamment d'une distance entre le premier dispositif d'affichage transparent (151A) et le second dispositif d'affichage transparent (151B), dans un état où le signal tactile prédéterminé est détecté.

9. Système de terminal mobile selon la revendication 1, dans lequel le second processeur est configuré en outre pour :
détecter un signal tactile prédéterminé par le biais de la seconde unité de dispositif d'affichage transparent (151B) et transmettre des données correspondant au signal tactile prédéterminé au premier terminal mobile, et
le premier processeur est configuré en outre pour :
dans un cas où une première zone du premier dispositif d'affichage transparent (151A) et une seconde zone du second dispositif d'affichage transparent (151B) se chevauchent entre elles dans un état où le signal tactile prédéterminé est détecté, afficher des informations associées aux informations qui sont affichées sur le second dispositif d'affichage transparent (151B) dans la première zone.

10. Système de terminal mobile selon la revendication 1, dans lequel dans un cas où le second dispositif d'affichage transparent (151B) est espacé du premier dispositif d'affichage transparent (151A) après la détection d'une commande prédéterminée pour sélectionner une portion des informations communes, au moins l'un du premier processeur et du second processeur est configuré en outre pour afficher un contenu correspondant à la portion sélectionnée des informations.

11. Système de terminal mobile selon la revendication 10, dans lequel la commande prédéterminée comprend au moins l'une d'une commande tactile en touchant une fois une portion des informations communes, la portion des informations communes étant affichée dans l'une quelconque de la première zone et la seconde zone, et d'une commande tactile en touchant une fois une portion des informations communes, la portion des informations communes étant affichée dans l'une quelconque de la première zone et la seconde zone, et en faisant glisser la portion touchée des informations communes le long d'une direction vers un centre du second dispositif d'affichage transparent (151B).

12. Système de terminal mobile selon la revendication 10, dans lequel au moins l'un du premier processeur et du second processeur est configuré en outre pour détecter la commande prédéterminée et l'espace entre le premier dispositif d'affichage transparent (151A) et le second dispositif d'affichage transparent (151B) par au moins l'une de la première unité de détection (140A) et de la seconde unité de détection (140B).

13. Procédé de commande d'un système de terminal mobile comprenant un premier terminal mobile (100A) incluant un premier dispositif d'affichage transparent (151A), une première unité de détection (140A) et un premier processeur, un second terminal mobile (100B) incluant un second dispositif d'affichage transparent (151B), une seconde unité de détection et un second processeur, le procédé comprenant les étapes de :
affichage d'un premier contenu sur le premier dispositif d'affichage transparent (151A) et un second contenu sur le second dispositif d'affichage transparent (151B) ;
et
détection d'un chevauchement et un espacement entre le premier dispositif d'affichage transparent (151A) et le second dispositif d'affichage transparent (151B), dans lequel le second contenu qui est affiché sur la seconde unité de dispositif d'affichage transparent (151B) est changé par rapport à un niveau de chevauchement et une distance entre le premier dispositif d'affichage transparent (151A) et le second dispositif d'affichage transparent (151B), le niveau de chevauchement et la distance étant détectés par au moins l'une de la première unité de détection (140A) et la seconde unité de détection (140B) ; et **caractérisé en ce que**
dans un cas où une première zone du premier dispositif d'affichage transparent (151A) et une seconde zone du second dispositif d'affichage transparent (151B) se chevauchent entre elles, l'affichage d'informations communes sur au moins l'une de la première zone et la seconde zone tout en maintenant l'affichage du premier contenu sur une zone sans chevauchement du premier dispositif d'affichage transparent (151A) et en maintenant l'affichage du second contenu sur une zone sans chevauchement du second dispositif d'affichage transparent (151B), dans lequel les informations communes sont des informations additionnelles associées au premier contenu et au second contenu.
